# FASCICULE DE BREVET EUROPEEN

(11) **EP 0 975 447 B1**
(45) Date de publication et mention de la délivrance du brevet: **02.05.2003**
(21) Numéro de dépôt: 99903748.4
(22) Date de dépôt: 12.02.1999
(51) Int. Cl.: B21B 13/14, B21B 37/36, B21B 31/26, B21B 31/02

(54) **INSTALLATION DE LAMINAGE DE PRODUITS PLATS**
WALZANLAGE FÜR FLACHPRODUKTE
ROLLING INSTALLATION FOR FLAT PRODUCTS

(30) Priorité: 13.02.1998 FR 9801784
(43) Date de publication de la demande: 02.02.2000
(73) Titulaire: Vai Clecim, 92000 Nanterre cedex (FR)
(72) Inventeur: LECRIVAIN, Alain, F-77380 Combs la Ville (FR)
(74) Mandataire: Le Brusque, Maurice
(86) Numéro de dépôt international: FR9900322
(87) Numéro de publication internationale: WO99041026

(56) Documents cités:
- WO-A-91/04108
- FR-A- 2 523 879
- US-A- 2 106 866
- US-A- 3 355 924
- US-A- 4 206 700
- US-A- 4 480 452

## Description

L'invention a pour objet une installation de laminage d'un produit plat et s'applique spécialement au laminage à chaud ou à froid d'une bande ou d'un feuillard métallique.

L'invention couvre également le procédé de mise en oeuvre d'une telle installation de laminage.

Un laminoir comprend, d'une façon générale, une cage fixe ayant deux colonnes écartées reliées par une entretoise et entre lesquelles sont disposés plusieurs cylindres superposés à axes parallèles, respectivement deux cylindres de travail définissant un entrefer de passage du produit et un ou plusieurs cylindres de soutien.

Dans les cages dites trio, on utilise un seul cylindre de soutien pour un cylindre de travail de petit diamètre, l'autre cylindre de travail ayant un diamètre suffisant pour résister par lui-même aux efforts appliqués.

En revanche, les cages dites quarto sont symétriques, et comprennent deux cylindres de travail prenant appui respectivement, du côté opposé à l'entrefer, chacun sur un cylindre de soutien de plus grand diamètre.

On connaît aussi des cages quinto ou sexto, dans lesquelles un cylindre intermédiaire est interposé entre un cylindre de travail et le cylindre de soutien correspondant.

Enfin, dans les cages appelées "Z-High" qui sont du type sexto, chaque cylindre de travail est associé à deux ensembles d'appui latéraux, appelés inserts, disposés de part et d'autre du cylindre de travail, dans l'espace compris entre celui-ci et la périphérie du cylindre intermédiaire associé.

Dans tous les cas, les cages de laminoir sont conçues pour tenir l'ensemble des cylindres (soutien, travail, intermédiaires,...) dans un plan de serrage vertical contenant leurs axes et sensiblement perpendiculaire au plan horizontal de laminage du produit appelé aussi "ligne de passe".

Dans les cages dites réversibles, le produit circule dans les deux sens, des tables à rouleaux étant placées de part et d'autre de la cage. Dans les laminoirs dits tandem, le produit forme une bande continue qui passe successivement dans plusieurs cages de laminage réalisant chacune une réduction d'épaisseur.

Il est nécessaire de régler les niveaux relatifs des cylindres pour ajuster le niveau du plan de laminage et l'épaisseur de l'entrefer.

Habituellement, dans une cage de laminoir classique, chaque cylindre est monté rotatif sur un arbre dont les deux extrémités constituent chacune un tourillon tournant dans un palier logé dans une pièce de support appelée empoise. Pour permettre les ajustements en hauteur des cylindres, les empoises sont montées coulissantes dans des fenêtres ménagées respectivement dans les deux colonnes de la cage, le long de faces de guidage parallèles à un plan de serrage passant par les axes des cylindres.

Le niveau du plan de laminage est déterminé, normalement, par celui du cylindre de soutien inférieur qui repose, par ses extrémités, sur des cales fixes ou d'épaisseur réglable.

Des vérins d'équilibrage prenant appui sur les empoises des cylindres de travail règlent leurs niveaux relatifs pour déterminer l'épaisseur de l'entrefer et permettent, en outre, de placer les cylindres au niveau de rails fixes de démontage.

D'autres vérins d'équilibrage prenant appui sur les empoises du cylindre de soutien supérieur permettent de régler le niveau de celui-ci entre une position de démontage pour laquelle les cylindres peuvent être écartés les uns des autres et la position de laminage déterminée par les moyens de serrage prenant appui sur les colonnes.

Etant donné que les cylindres de travail ont un diamètre plus petit que celui des cylindres de soutien et que leurs empoises sont également plus petites, les faces de guidage des cylindres de travail sont plus resserrées que celles des cylindres de soutien. Dans un laminoir quarto, par exemple, chaque fenêtre est constituée d'une ouverture rectangulaire de largeur correspondant aux empoises des cylindres de soutien et s'étendant sur toute la hauteur occupée par les cylindres, et les faces de guidage des empoises des cylindres de travail sont ménagées sur des parties en saillie vers l'intérieur de la fenêtre.

D'une façon générale, le produit à laminer ayant une épaisseur initiale passe entre les deux cylindres de travail dont l'écartement est moindre, de façon à déterminer une réduction de l'épaisseur initiale par laminage du produit. Les deux cylindres de travail ont donc tendance à s'écarter l'un de l'autre et prennent appui chacun sur un cylindre de soutien, de plus grand diamètre, dont le niveau est maintenu par des moyens de serrage, par exemple du type à vis écrou ou à vérin hydraulique, qui prennent appui, d'un côté sur la colonne correspondante, et de l'autre, sur les empoises de support du cylindre de soutien. Celles-ci sont donc montés coulissantes dans une fenêtre de la colonne qui a donc la forme d'un cadre rectangulaire comprenant deux montants verticaux, une traverse supérieure et une traverse inférieure.

L'effort de laminage qui tend à écarter les cylindres et est repris par les deux colonnes de la cage, est extrêmement important dans le cas du laminage de bande métallique et peut atteindre, par exemple, plusieurs milliers de tonnes.

Comme cet effort de laminage est appliqué sur les extrémités des cylindres de soutien, ceux-ci ont tendance à fléchir et il en résulte, dans le sens transversal à la direction de défilement, une variation d'épaisseur qui doit être compensée.

Auparavant, on donnait aux cylindres de soutien un profil bombé mais, plus récemment, on a proposé d'appliquer sur les cylindres de travail un effort de cintrage, soit dans un sens positif d'écartement de leurs extrémités soit dans un sens négatif de rapprochement. A cet effet, on utilise habituellement des vérins de cintrage prenant appui, dans le sens positif ou dans le sens négatif, sur les empoises des cylindres de travail et qui sont logés, habituellement, dans les parties en saillie de la fenêtre servant au guidage des empoises et qui constituent des blocs hydrauliques.

Il est ainsi possible, en cas de besoin, de modifier la répartition des contraintes appliquées sur le produit pour corriger des défauts de planéité détectés en aval.

Les mêmes vérins peuvent être utilisés pour appliquer les efforts de cintrage et pour régler les niveaux relatifs des cylindres de travail.

On a également proposé, pour corriger les défauts de planéité, d'utiliser un cylindre de soutien du type à enveloppe tournante comprenant une enveloppe tubulaire montée rotative autour d'un arbre central fixe et prenant appui sur celui-ci par l'intermédiaire d'une pluralité de patins dont la position radiale peut être réglée individuellement de façon à compenser la flexion de l'arbre et à corriger la répartition des contraintes sur le cylindre de travail associé.

Le document US-A-4,480,452 par exemple, décrit une disposition de ce type dans laquelle, pour permettre la flexion de l'arbre central, les extrémités de celui-ci prennent appui sur la cage par l'intermédiaire d'articulations à rotule sphérique.

Mais l'application d'un effort de laminage très important sur chaque colonne de la cage peut aussi déterminer un effet de cédage de celle-ci et même une déformation de la fenêtre.

Dans les laminoirs modernes, on connaît des moyens permettant de déterminer le cédage de la cage en fonction de l'effort de laminage et, par conséquent, d'en tenir compte dans les différents réglages pour garantir la réduction d'épaisseur souhaitée.

En revanche, jusqu'à présent, on ne connaissait pas de moyen permettant d'éviter la déformation des colonnes de la cage qui forment chacun un anneau fermé pour résister, dans de bonne condition, aux efforts appliqués.

En effet, étant donné que la fenêtre doit avoir une largeur minimale pour y loger les empoises des cylindres et que les vis ou vérins de serrage prennent appui au centre de chaque traverse dans le plan de serrage passant par les axes des cylindres, il en résulte une certaine flexion de la traverse qui détermine un léger resserrement des deux montants verticaux de la colonne.

Il est donc nécessaire de prévoir un jeu suffisant pour éviter un frottement excessif, et même un blocage des empoises à l'intérieur des fenêtres.

Pour limiter les risques de déformation de la cage sous l'effort de laminage, on a été amené à concevoir des cages très massives constituées de pièces en acier dont certaines peuvent dépasser 100 tonnes et sont donc très difficiles à couler et à manutentionner pour usinage. Par exemple, pour un laminoir capable d'un effort de laminage de 3000 tonnes, la section de chaque montant peut atteindre 7000 cm².

Grâce à l'utilisation de systèmes de serrage hydrauliques associés à des moyens de mesure et à des commandes électriques ou électroniques permettant de compenser l'allongement de la cage sous effort, il est possible de réduire la section des montants, à effort égal, en minimalisant le resserrement de la fenêtre. Celui-ci ne peut, cependant, être totalement évité et les frottements qui en résultent s'opposent au déplacement vertical des empoises et provoquent un phénomène d'hystérésis dans la régulation d'épaisseur du produit laminé qui dégrade les tolérances d'épaisseur.

On sait, d'autre part, que les cylindres d'un laminoir s'usent relativement rapidement et doivent être réusinés. Il est donc nécessaire, périodiquement, de retirer certains cylindres pour entretien et remplacement, lorsque l'usure est trop importante ou bien, dans le cas des cylindres de travail, lorsque le diamètre de ceux-ci doit être sensiblement modifié pour s'adapter à un nouveau programme de laminage.

L'extraction d'un cylindre ou son introduction dans 1a cage se fait par déplacement du cylindre le long de son axe. Pour cela, le cylindre à remplacer doit être d'abord écarté verticalement des cylindres adjacents pour éviter les frottements, puis se déplace horizontalement sur des rails placés à un niveau constant.

De plus, il faut aussi compenser les variations de diamètre des cylindres en modifiant leurs niveaux relatifs.

Habituellement, tous les cylindres d'une cage sont donc montés déplaçables, le long des deux colonnes, entre une position de serrage pour laquelle les cylindres de travail sont écartés d'une distance correspondant à l'entrefer souhaité et une position de démontage pour laquelle les cylindres sont espacés les uns des autres.

Généralement, dans un laminoir quarto ou sexto, les cylindres de travail reposent l'un sur l'autre et sont changés par paires alors que les cylindres de soutien sont changés l'un après l'autre après avoir démonté les autres cylindres et introduit des pièces intermédiaires de support.

Normalement, le niveau du cylindre de soutien supérieur est réglé par les moyens de serrage montés sur les colonnes alors que les empoises du cylindre de soutien inférieur reposent sur des cales dont le niveau peut avantageusement être réglé entre une position relevée qui détermine le niveau du plan de laminage et une position abaissée pour le démontage. Le niveau des cylindres de travail peut être réglé au moyen des vérins de cintrage qui prennent appui soit directement sur la cage, soit sur les empoises du cylindre de soutien inférieur.

Cependant, la complexité des installations modernes et, en particulier, la présence des empoises et des dispositifs de cintrage associés multiplie les manoeuvres nécessaires au démontage et augmente les temps d'intervention en diminuant d'autant le temps de production.

L'invention a pour objet un nouveau type de laminoir qui permet de résoudre de façon optimale l'ensemble des problèmes qui viennent d'être évoqués et présente encore d'autres avantages. En particulier, l'invention permet de diminuer les risques de déformations de la cage et, par conséquent, d'alléger celle-ci. De plus, l'invention permet de simplifier considérablement la réalisation de la cage de support des cylindres, de supprimer certains organes annexes et de faciliter les opérations de réglage et de remplacement des cylindres, la réalisation d'une telle installation étant sensiblement plus économique.

L'invention s'applique donc, d'une façon générale, à une installation de laminage d'un produit en bande métallique comprenant une cage de maintien fixe ayant deux colonnes écartées formant chacune un cadre fermé comprenant deux montants, une traverse supérieure et une traverse inférieure, et limitant une fenêtre centrale, et au moins deux cylindres à axes parallèles définissant un entrefer de passage du produit suivant un plan de laminage avec application, entre les cylindres, d'un effort de serrage pour le laminage du produit, au moins l'un des cylindres constituant un cylindre de soutien pour l'application de l'effort de serrage, ledit cylindre de soutien étant monté rotatif autour de son axe et porté par deux têtes d'extrémités opposées montées chacune dans une pièce de support prenant appui, du côté opposé à l'entrefer, sur une face d'appui de la traverse correspondante de chaque colonne,

Conformément à l'invention, au moins sur un côté de la cage, la traverse de chaque colonne est munie d'une face d'appui présentant, sur toute la largeur de la fenêtre un profil arrondi concave s'étendant sur un secteur angulaire d'au moins 180° et la pièce de support de chaque tête d'extrémité du cylindre de soutien prend appui sur ladite traverse par l'intermédiaire d'une partie d'appui limitée par une face de contact ayant un profil arrondi convexe conjugué à celui de la face d'appui, de façon à s'insérer dans celle-ci.

L'invention s'applique spécialement à un laminoir de type quarto ou sexto comprenant, de chaque côté du plan de laminage, au moins deux cylindres, respectivement un cylindre de travail tournant autour d'un arbre ayant deux tourillons opposés portés par des empoises enfilées entre deux faces de guidage parallèles au plan de serrage passant par les axes des cylindres de travail, et au moins un cylindre de soutien de plus grand diamètre que le cylindre de travail.

Dans ce cas, au moins d'un côté du plan de laminage, la fenêtre de chaque colonne de la cage comprend, à son extrémité opposée au plan de laminage, un évidement limité par une face arrondie s'étendant sur un secteur angulaire d'au moins 180° et une partie centrale limitée par deux côtés sur lesquels sont ménagées des faces parallèles de guidage des empoises du cylindre de travail.

De préférence, la face d'appui concave de la traverse et la face de contact de la pièce de support présentent un profil circulaire sur un secteur d'au moins 180°.

Selon une autre caractéristique particulièrement avantageuse, l'invention permet de simplifier le processus de démontage et de remplacement des cylindres et, en particulier, des cylindres de soutien, lorsque ces derniers peuvent être retirés de la cage par déplacement parallèlement à leur axe.

En effet, l'une des colonnes de la cage, placée du côté de démontage, est munie d'un premier évidement pour le logement d'une première pièce de support du cylindre, qui traverse complètement ladite première colonne, et présente, dans toutes les directions, ainsi que ladite première pièce de support, des dimensions supérieures à celles du cylindre de soutien, de façon à en permettre le démontage au moins dans une position de celui-ci par rapport à la cage, par déplacement axial dudit cylindre du côté de ladite première colonne , en passant par ledit premier évidement de plus grandes dimensions.

D'autre part, la seconde pièce de support du cylindre opposée au côté de démontage et l'évidement correspondant de la seconde colonne de la cage présentent, dans toutes les directions, des dimensions au plus égales à celles du cylindre, ce dernier étant ainsi démontable en bloc, avec ses deux pièces de support, en passant par le premier évidement.

De façon particulièrement avantageuse, on utilise un cylindre de soutien du type comprenant une enveloppe tournante montée rotative autour d'une poutre de support fixe et prenant appui sur celle-ci par l'intermédiaire d'une pluralité de patins d'appui réglés individuellement par des vérins.

Dans ce cas, les pièces de support des deux têtes d'extrémités de l'arbre central sont logées chacune dans un évidement ménagé à une extrémité correspondante de la fenêtre de la colonne correspondante et limité par une face d'appui concave, ladite pièce de support étant entourée, au moins du côté opposé à l'entrefer, par une partie d'appui limitée par une face de contact convexe conjuguée à ladite face d'appui de l'évidement.

Dans une telle disposition selon l'invention, le serrage des cylindres et le réglage de leurs niveaux relatifs est assuré, au moins en partie, par les moyens de réglage individuel de la position radiale de chaque patin, lesdits moyens étant commandés simultanément de façon à régler et maintenir au niveau souhaité la génératrice d'appui de ladite enveloppe sur le cylindre de travail correspondant.

De préférence, les pièces de support des deux têtes d'extrémités de l'arbre du cylindre prennent appui, respectivement, sur les parties fixes d'appui des deux colonnes de la cage par l'intermédiaire de moyens d'épaisseur réglable qui constituent des moyens d'ajustement du niveau du cylindre par rapport au niveau constant déterminé par les parties d'appui fixes des fenêtres des deux colonnes.

Par exemple, la pièce de support de chaque extrémité de l'arbre, peut être munie d'une bague excentrique ayant deux faces circulaires excentrées l'une par rapport à l'autre, respectivement une face interne enfilée sur une face d'appui cylindrique ménagée sur la tête d'extrémité de l'arbre central et une face externe enfilée dans un alésage cylindrique ménagé sur la pièce de support, la position angulaire de ladite bague par rapport à la pièce de support pouvant être modifiée par rotation de la bague pour régler le niveau de l'axe du cylindre par rapport à la pièce de support.

Dans une disposition encore plus perfectionnée, les moyens d'ajustement comprennent, à chaque extrémité du cylindre, un ensemble de deux bagues excentriques montées l'une dans l'autre et ayant chacune deux faces circulaires excentrées l'une par rapport à l'autre, respectivement une bague interne enfilée sur la tête d'appui du cylindre et une bague externe enfilée dans un alésage de la pièce de support, les positions angulaires relatives desdites bagues l'une par rapport à l'autre et par rapport à la pièce de support pouvant être modifiées.

De la sorte, le réglage des positions angulaires respectives des deux bagues par rapport à la pièce de support détermine, en combinant les excentrements, le déplacement de l'axe de la face d'appui cylindrique de l'arbre à l'intérieur d'un cercle centré sur l'axe de l'alésage et ayant un rayon égal à la somme des excentrements maximaux des deux bagues.

L'invention couvre également plusieurs autres caractéristiques avantageuses qui font l'objet des sous-revendications.

Mais l'invention sera mieux comprise par la description suivante de certains modes de réalisation donnés à titre d'exemple et représentés sur les dessins annexés.

La figure 1 est une vue schématique, en coupe longitudinale, d'une cage de laminage selon l'invention.

La figure 2 est une vue de côté de la cage.

La figure 3 est une vue de détail d'une pièce de support et de l'extrémité d'un cylindre de soutien, en coupe par un plan passant par l'axe du cylindre.

La figure 4 représente, en vue de face, une pièce de support à une bague excentrique.

La figure 5 représente, en vue de face, une pièce de support à deux bagues excentriques.

La figure 6 est un schéma de fonctionnement du dispositif de la figure 5.

L'invention sera exposée, à titre d'exemple, dans le cadre d'un laminoir de type quarto mais peut s'appliquer à tout type de laminoir comprenant au moins un cylindre de soutien d'assez grand diamètre.

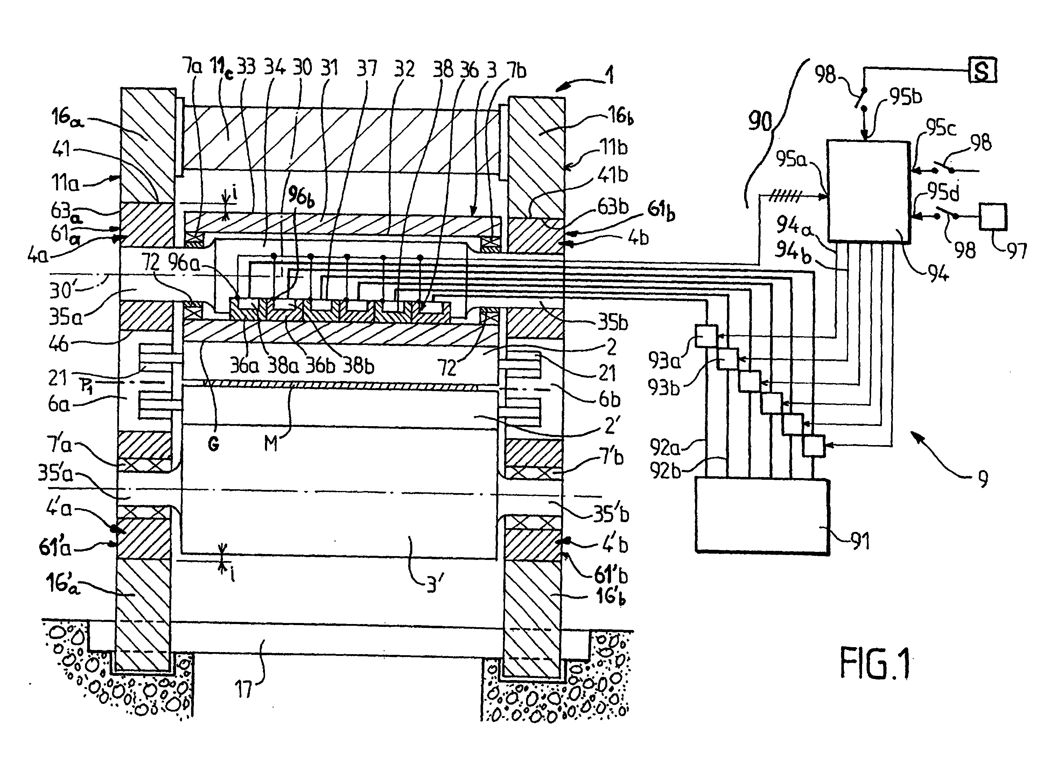

D'une façon générale, un tel laminoir comprend, comme on l'a indiqué sur la figure 1, une cage fixe 1 ayant deux colonnes écartées 11a, 11b entre lesquelles sont disposés quatre cylindres superposés, respectivement deux cylindres de travail 2, 2' définissant un entrefer 15 de passage du produit M suivant un plan de laminage P1, et deux cylindres de soutien 3, 3'. Les axes des cylindres sont sensiblement parallèles et placés dans un plan de serrage P2 qui constitue, normalement, un plan médian vertical de la cage.

Généralement les deux colonnes 11a 11b sont réunies entre elles à leur partie supérieure, par une entretoise 11c, boulonnée sur les faces intérieures des colonnes qui, à leur partie inférieure, reposent sur des entablements en acier 17 boulonnés sur les fondations.

Habituellement, chaque cylindre est monté rotatif, à ses deux extrémités opposées, sur des tourillons tournant dans des paliers logés dans des empoises qui sont enfilées dans une fenêtre ménagée dans chaque colonne de la cage et, pour permettre les réglages de niveau en assurant le maintien latéral du cylindre, les empoises sont montées coulissantes chacune entre deux faces de guidage ménagées sur les deux côtés de la fenêtre et parallèles au plan de serrage P2 passant par les axes des cylindres de travail. De ce fait, chaque fenêtre présente habituellement une forme rectangulaire, la colonne constituant un cadre fermé comportant deux montants verticaux, une traverse supérieure et une traverse inférieure.

Par ailleurs, l'effort de laminage qui s'oppose à l'écartement des cylindres est appliqué par des moyens de serrage prenant appui sur la partie centrale des deux traverses de la colonne et, pour résister aux efforts importants exercés dans le laminage de bandes métalliques, il est nécessaire que la liaison entre chaque extrémité d'une traverse et le montant correspondant de la colonne se comporte comme un encastrement. C'est pourquoi, dans les laminoirs de bandes métalliques, chaque colonne est, généralement, réalisée par moulage en une seule pièce, de façon à constituer un anneau fermé de forme rectangulaire.

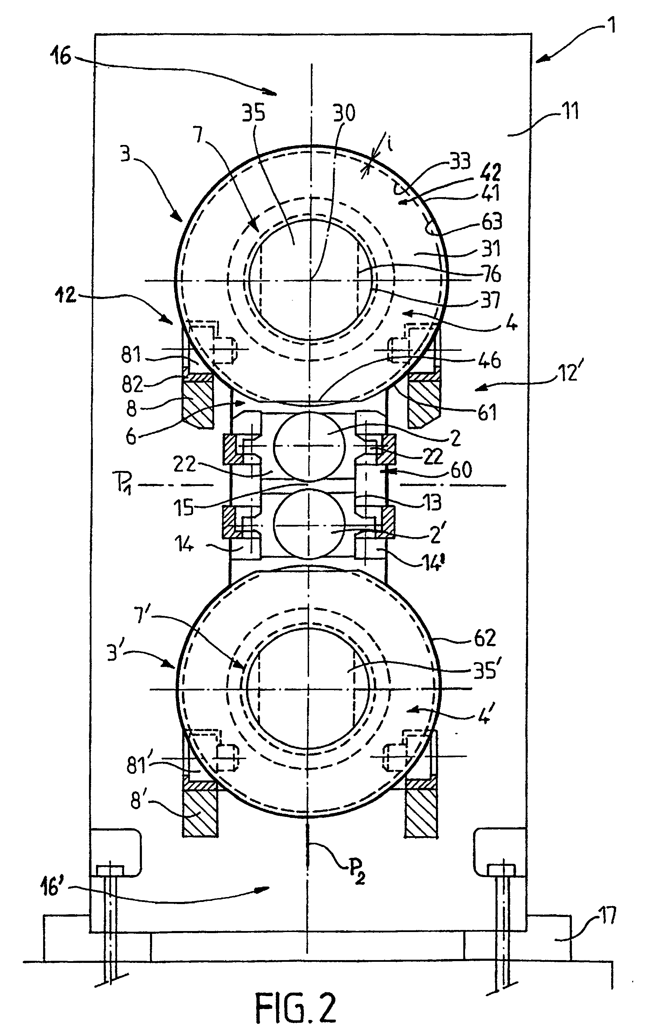

Dans l'invention, comme le montrent les figures 1 et 2, la forme de chaque colonne 11a, 11b est sensiblement différente.

En effet, alors que les cylindres de travail 2, 2' sont portés, à leurs extrémités, comme habituellement, par des empoises 21 montées coulissantes, parallèlement au plan de serrage P2, le long de faces de guidage 13, les pièces de support 4a, 4b, 4'a, 4'b des deux cylindres de soutien 3, 3' sont, en revanche, simplement logées dans des évidements 61, 61' limités chacun, au moins du côté opposé à l'entrefer 15, par une face arrondie concave 63, 63' qui s'étend sur un secteur angulaire d'au moins 180°.

De la sorte, chaque fenêtre 6 présente une forme oblongue ayant une partie centrale limitée par deux faces parallèles et deux extrémités limitées chacune par une face semi-cylindrique.

Etant donné que, comme on l'a vu, les faces de guidage 13 des empoises de travail 21 sont habituellement ménagées sur des parties en saillie s'étendant l'une vers l'autre, les faces internes 63, 63' des deux évidements 61, 61' s'étendent avantageusement sur un secteur circulaire supérieur à 180°, comme l'indique la figure 2, chaque fenêtre présentant une forme analogue à un violon.

Les pièces de support 4, 4' des deux cylindres de soutien 3, 3' sont associés à des parties d'appui présentant une forme conjuguée à celle des faces concaves 63, 63' des deux évidements 61, 61' de façon à s'insérer complètement dans ceux-ci.

De ce fait, l'effort de serrage exercé entre les cylindres de soutien 3, 3' au cours du laminage est appliqué sur toute la largeur de la traverse 16 de la fenêtre 11 et sur une surface concave, de préférence circulaire, qui s'étend sur un secteur circulaire d'au moins 180°. L'effet d'encastrement de la traverse 16 sur les deux montants 12, 12' n'est donc pas concentré, comme précédemment, dans les angles de la fenêtre et la pression appliquée par la pièce de support 4 sur la traverse 16 se répartit dans toutes les directions autour de l'axe 30 du cylindre.

L'invention peut être mise en oeuvre dans un laminoir comprenant, comme habituellement, des moyens de serrage tels que vis ou vérin prenant appui, d'un côté sur la cage et de l'autre côté sur les empoises des cylindres de soutien. Dans ce cas, chaque empoise peut être associée à une pièce d'appui intermédiaire, limitée par une face convexe conjuguée à la face concave 63 de l'évidement 61 de façon à venir se loger dans celui-ci, les moyens de serrage étant interposés entre cette pièce d'appui et l'empoise du cylindre.

Cependant, il est aussi possible de supprimer cette pièce intermédiaire, les pièces de support 4 de chaque cylindre de soutien étant alors directement insérées dans les évidements 61, 61' et prenant appui à un niveau constant sur les deux colonnes de la cage.

Dans ce cas, les vis de serrage sont supprimées et ne peuvent donc plus être utilisées pour réaliser les réglages en hauteur des cylindres de soutien.

Selon une autre caractéristique essentielle de l'invention, ce réglage en hauteur peut être effectué en déplaçant le cylindre lui même. A cet effet, comme l'indiquent les figures 1 et 2, au moins l'un des cylindres de soutien, de préférence le cylindre de soutien supérieur 3, est constitué d'un cylindre à enveloppe tournante de type connu comprenant un arbre central 34 en forme de poutre allongée sur lequel est enfilée une enveloppe tubulaire 31 ayant une face interne 32 et une face externe 33 cylindriques et centrées sur un même axe 30.

L'enveloppe tubulaire 31 est maintenue centrée sur son axe 30 par deux paliers 7a, 7b montés respectivement, chacun sur une bague intermédiaire 72, enfilée sur une tête d'extrémité 35a, 35b de l'arbre 34.

Lorsque les cylindres sont en contact, la face externe 33 de l'enveloppe tubulaire 31 prend appui sur le cylindre de travail correspondant 2 suivant une génératrice commune G.

Par ailleurs, une pluralité de patins adjacents 36 sont disposés le long du plan de serrage P, entre une face d'appui 34' de l'arbre 34 tournée du côté du cylindre de travail 2 et la face interne 32 de l'enveloppe tubulaire 31.

Dans un tel cylindre, les efforts de laminage qui s'exercent le long de la génératrice G, en cours de laminage, sont repris par l'arbre central 34, par l'intermédiaire des patins 36 sur lesquels prend appui l'enveloppe tubulaire 31. Pour permettre un appui glissant, chaque patin 36 est muni d'une face externe en forme de secteur circulaire de diamètre sensiblement égal, au jeu près, à celui de la face interne 32 de l'enveloppe 31 et formant un coussinet d'appui de l'enveloppe 31, un lubrifiant étant introduit entre la face externe de chaque patin 36 et la face interne de l'enveloppe.

De plus, chaque patin est déplaçable radialement suivant une direction perpendiculaire à l'axe 30 de l'enveloppe 31 et est associé à des moyens de réglage de sa position radiale, constitués généralement de vérins hydrauliques 38 prenant appui d'un côté sur le patin 36 et de l'autre sur la face d'appui 34' de l'arbre 34.

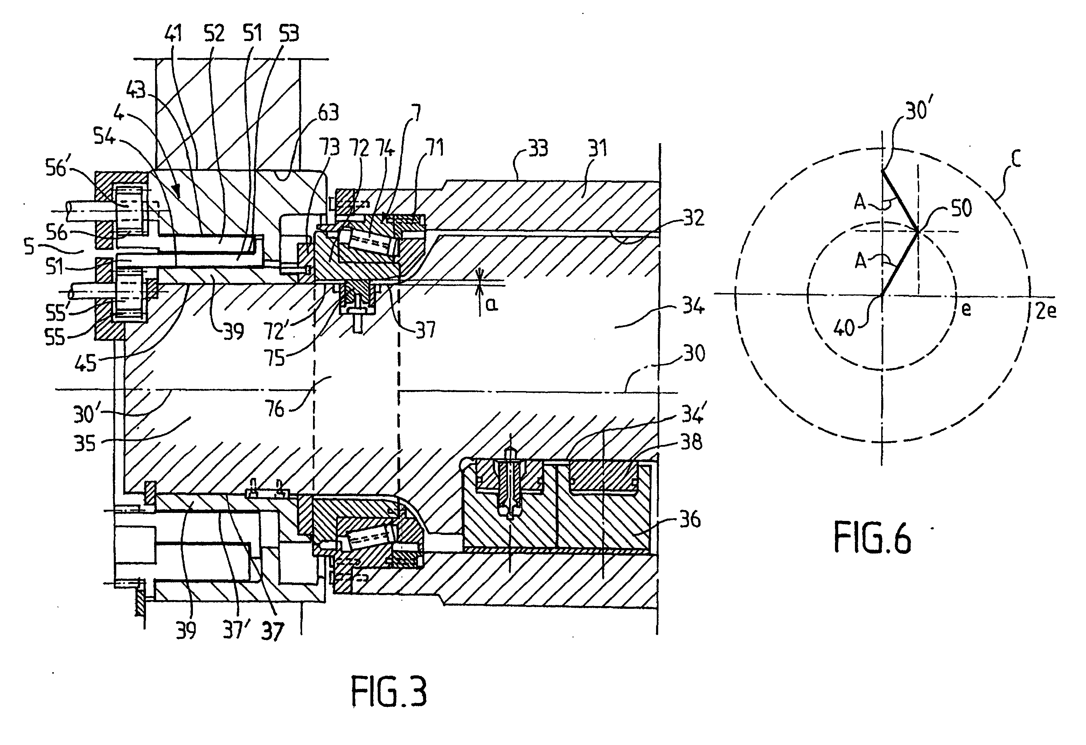

Les paliers d'extrémité 7a, 7b ont essentiellement pour objet d'assurer le maintien transversal de l'enveloppe 31 sans gêner son déplacement radial. A cet effet, comme le montre la figure 3, chaque palier 7 comprend, de façon classique, une cage externe 71 fixée dans un alésage ménagé à l'extrémité de l'enveloppe tubulaire 31 et une cage interne montée sur la bague intermédiaire 72, des éléments de roulement 74, par exemple des roulements coniques, étant interposés entre les deux cages. L'ensemble du palier est maintenu par une butée 73 prenant appui axialement sur l'extrémité 35 de l'arbre 34.

Chaque tête d'extrémité 35a, 35b de l'arbre 34 est limitée, normalement, par une face cylindrique 37 centrée sur un axe 30' et, pour permettre le déplacement radial de l'enveloppe 31 par rapport à l'arbre 34 sous l'action des patins 36, un jeu (a) est laissé entre la face interne 72' de la bague intermédiaire 72 et la face latérale 37 de la tête d'extrémité 35 de l'arbre central 34. Cependant, pour assurer le maintien transversal de l'enveloppe sans gêner les déplacements radiaux, la bague intermédiaire 72 est munie, latéralement, de deux méplats 76, représentés schématiquement sur la figure 2, qui coulissent le long de faces planes correspondantes ménagées sur les deux têtes 35 de l'arbre 34 et parallèles au plan de serrage P dans lequel sont placés les axes des cylindres.

La position relative de la bague 72 de support de chaque palier 7 par rapport à l'arbre 34 est réglée par un vérin d'équilibrage 75 logé dans un évidement ménagé dans la partie correspondante de la tête 35a, 35b de l'arbre 34. Les deux vérins 75 portant respectivement les deux paliers 7a, 7b permettent donc de déterminer le niveau général de l'enveloppe tubulaire 31 par rapport à l'arbre 34.

Dans le cas habituel où les vérins 38 de réglage des patins 36 sont à simple effet et repoussent l'enveloppe 31 vers le cylindre de travail 2, le rappel nécessaire au contrôle de la position de l'enveloppe est assuré par les vérins 75.

Bien entendu, le cylindre à enveloppe tournante 3 utilisé pour l'invention, peut bénéficier de tous les perfectionnements apportés précédemment aux cylindres de ce type. En particulier, il est avantageux que les patins de réglage 36 couvrent un secteur angulaire assez important, par exemple de l'ordre d'un quadrant ou plus et soient associés à des moyens de circulation d'huile assurant un effet de portance hydrodynamique.

Comme on l'a indiqué, dans les laminoirs connus, les cylindres à enveloppe tournante de ce type étaient utilisés, jusqu'à présent, pour contrôler la répartition des contraintes le long de la génératrice d'appui G et l'effort de serrage était appliqué sur les deux extrémités de l'arbre du cylindre de soutien par des vis ou vérins servant également au réglage de niveau du cylindre.

En revanche, dans un laminoir selon la présente invention et contrairement à la disposition habituelle, l'arbre central du cylindre de soutien 3 à enveloppe tournante prend appui à un niveau constant sur les deux colonnes 11a, 11b de la cage 1, par l'intermédiaire des blocs de support 4a, 4b montés respectivement aux deux extrémités 35a, 35b de l'arbre 34.

Ces blocs d'extrémité peuvent être constitués, comme le montrent les figures 1 et 2, de pièces usinées 4a, 4b qui sont simplement insérées dans les logements correspondants 61a, 61b ménagés dans les colonnes 11a, 11b et ayant une forme en creux conjuguée.

Comme habituellement, le cylindre à enveloppe tournante 3 est associé à un système hydraulique 9 comprenant des moyens de réglage individuel, en position et en pression, des vérins associés à chacun des patins 36 d'appui de l'enveloppe, et permettant d'ajuster chaque patin de façon à contrôler la répartition des contraintes, par exemple, en fonction de mesures de planéité effectuées sur le produit laminé, en aval du laminoir.

Dans l'invention, le cylindre 3 à enveloppe tournante permet encore de corriger la répartition des contraintes mais assure essentiellement une nouvelle fonction. En effet, étant donné que l'arbre central 34 prend appui à un niveau constant sur la cage, l'application de l'effort de serrage et le réglage du niveau des positions relatives des cylindres de soutien dans la cage et de l'épaisseur de l'entrefer 15 entre les cylindres de travail 2, 2' sont assurés par l'ensemble des patins d'appui 36 qui déterminent le déplacement, parallèlement, à elle-même, de l'enveloppe tubulaire 31 et, par conséquent, de la génératrice d'appui G par rapport à un niveau de référence constant déterminé par les logements 61, 61'.

Ce déplacement contrôlé, parallèlement à elle-même, de l'enveloppe tubulaire 31 peut, en effet, être assuré par les moyens individuels 38 de réglage de la position radiale de chacun des patins 36 qui sont commandés simultanément.

L'ensemble des patins 36 constitue ainsi, d'une part le moyen principal de positionnement du cylindre de soutien 3 pour le réglage des niveaux des cylindres et, éventuellement, du niveau de l'entrefer 15 et, d'autre part le moyen d'application de l'effort de serrage entre les cylindres de travail 2, 2'.

Le cylindre de soutien inférieur 3' peut être aussi un cylindre à enveloppe tournante, comme représenté sur la figure 2, ou bien un cylindre plein.

Dans un tel mode de réalisation, représenté sur la figure 1, le cylindre de soutien inférieur 3' est porté par deux tourillons 35'a, 35'b montés rotatifs dans des empoises 4'a, 4'b, de niveau fixe, qui sont logées, comme les blocs de support du cylindre de soutien supérieur 3, dans des logements correspondants 61'a, 61'b ménagés à la partie inférieure des deux colonnes 11a, 11b.

Ainsi, selon une caractéristique essentielle de l'invention, les deux cylindres de soutien prennent appui à un niveau constant sur les deux colonnes de la cage et l'on peut donc supprimer les vis de serrage, ainsi que les empoises coulissantes prévues habituellement pour permettre les réglages en hauteur des cylindres de soutien.

En revanche, les empoises de travail 21a, 21b sont, comme habituellement, montées coulissantes le long de faces de guidage 13 parallèles au plan de serrage P₂, qui sont ménagées avantageusement sur deux blocs hydrauliques 14, 14' fixés sur les deux montants 12, 12' de la colonne 11 encadrant la fenêtre 6 et dans lesquels sont logés des vérins non représentés de réglage de niveau et de cintrage des cylindres de travail 2, 2' qui prennent appui sur des oreilles 22 ménagées sur les deux côtés de chaque empoise 21 (Figure 2).

Chaque colonne 11a, 11b est donc munie d'une ouverture ayant grossièrement une forme en violon comprenant deux extrémités arrondies et une partie centrale resserrée.

Chaque bloc de support 4, 4' est ainsi entouré par la face d'appui 63 de l'évidement 61, pratiquement sur toute sa périphérie et au moins sur un secteur de 180°, c'est à dire jusqu'à deux zones diamétralement opposées sur lesquelles les pressions s'exercent horizontalement.

De ce fait, dans une cage de laminage selon l'invention, il n'y a plus à se préoccuper de l'effet de resserrement qui se produit, dans les cages classiques, entre les deux montants de la colonne, avec un risque de blocage des empoises. En effet, un resserrement éventuel des montants aura simplement pour effet d'augmenter le blocage des blocs de support 4, 4' dans les montants, ce qui est sans importance puisqu'aucun déplacement vertical n'est nécessaire pour ces blocs. De plus, ce blocage s'oppose au resserrement des montants dans leur partie centrale, au niveau des cylindres de travail 2, 2'.

Ainsi le resserrement au niveau des cylindres de soutien est infime et celui constaté au niveau des cylindres de travail est considérablement diminué. Il est donc possible de réduire les jeux à prévoir entre les faces de guidage 13 et les empoises de travail 21 pour garantir le coulissement vertical des cylindres de travail.

Habituellement, par exemple, on considère qu'il est nécessaire de laisser un jeu moyen de fonctionnement de 1/1000 au niveau des empoises de travail, entre leurs faces verticales de glissement et les faces de guidage correspondantes ménagées sur les blocs hydrauliques. Grâce à l'invention, en revanche, on peut considérer qu'un jeu moyen de 0,3/1000 sera suffisant.

Par ailleurs, la meilleure répartition des efforts permet de diminuer les inerties des parties constitutives des montants et il s'ensuit une économie de matière pour réaliser les colonnes de la cage, dont le poids peut être réduit de moitié.

Une cage de laminage selon l'invention sera donc beaucoup moins onéreuse que celles de conception classique puisqu'aucun dispositif supplémentaire de réglage des cylindres en hauteur n'est nécessaire et que le poids des colonnes est notablement diminué.

D'ailleurs, la fabrication des colonnes de la cage est également simplifiée.

En effet, habituellement, chaque colonne de la cage est constituée d'un cadre rectangulaire qui est moulé en une seule pièce et doit être ensuite usiné de façon très précise pour permettre l'application des faces de guidage des empoises qui, habituellement, sont constituées de pièces rapportées.

Dans l'invention, au contraire, les blocs de support des extrémités des cylindres de soutien sont complètement insérés dans les évidements et la pression se répartit sur toute leur périphérie. De plus, il n'y a plus de guidage. Il n'est donc pas nécessaire d'usiner avec une grande précision les faces d'appui 63 de la fenêtre 6 qui peuvent être simplement découpées au chalumeau, la colonne pouvant alors être constituée d'une simple tôle épaisse laminée.

Mais l'invention permet également de simplifier considérablement les dispositifs nécessaires pour le démontage et le remplacement des cylindres.

Comme on le sait, en effet, l'état de surface des cylindres de travail peut être détérioré au cours du laminage et ces derniers doivent donc être rectifiés périodiquement. Il en résulte que leur diamètre diminue. Les cylindres de soutien s'usent également mais leur usinage est moins fréquent.

En pratique, on dispose en atelier de plusieurs jeux de cylindres de travail et de cylindres de soutien pour remplacer immédiatement le ou les cylindres que l'on doit extraire de la cage pour rectification.

Dans les laminoirs classiques, le cylindre de soutien inférieur est généralement retiré de la cage en roulant sur des rails fixes et le cylindre de soutien supérieur est retiré seulement après retrait des cylindres de travail, et en utilisant des dispositifs assez complexes dont la mise en oeuvre est assez longue.

Grâce à l'invention, au contraire, étant donné que le cylindre de soutien supérieur 3 prend appui sur la cage 1 à un niveau constant et parfaitement déterminé, le démontage de ce cylindre peut être effectué au moyen de dispositifs installés à demeure.

En effet, comme les blocs de support supérieurs 4a, 4b sont placés à un niveau déterminé quels que soient les diamètres des différents cylindres, il est possible de les faire glisser ou rouler sur des rails fixes 8 montés sur la partie supérieure de la cage 1 au niveau voulu. De même, le cylindre de soutien inférieur 3' est extrait sur des rails 8' installés dans les fondations de la cage de laminage. On évite donc l'utilisation des systèmes complexes de démontage nécessaires auparavant, au moins pour le cylindre de soutien supérieur.

sur la figure 2, par exemple, qui montre une disposition quarto utilisant deux cylindres de soutien 3, 3' à enveloppe tournante, ces derniers sont en position de démontage, avant serrage sur des cylindres de travail 2, 2'.

On voit qu'il est possible de retirer de la cage, pour entretien ou remplacement, l'ensemble du cylindre de soutien 3 avec l'enveloppe tournante 31, l'arbre central 34 et ses blocs de support 4a, 4b. Le cylindre 3 se déplace parallèlement à l'axe 30 en passant dans l'évidement 61 de la colonne 11a placée du côté du déplacement, les blocs de support 4a, 4b étant équipés de galets de roulement 81 qui roulent sur des rails de démontage 8 munis de pièces de guidage et d'usure 82.

Les rails sont installés dans la cage de laminage 1 et sont prolongés, à l'extérieur, par des dispositifs de supportage de cylindres non représentés et qui peuvent être différents selon les installations. De même on peut imaginer des vérins ou d'autres moyens pour produire le mouvement nécessaire pour sortir les cylindres de soutien 3, 3' de la cage de laminage. Des tronçons de rails amovibles peuvent assurer les liaisons à l'intérieur de la cage.

Comme l'indique la figure 1, si le cylindre 3 est démonté en se déplaçant vers la gauche, il traverse la colonne 11 en passant par l'évidement 61a. Dans l'exemple représenté sur les figures 1 et 2, le bloc de support 4a placé du côté du démontage et, par conséquent, l'évidement 61a correspondant, sont limités par des surfaces cylindriques respectivement 41 et 63 ayant un rayon légèrement supérieur à celui de la face externe 33 de l'enveloppe 31, de façon à laisser, entre la face 32 du cylindre et la surface 63 de l'évidement, un jeu minimum (i) suffisant pour éviter tout risque de détérioration de l'enveloppe tubulaire au cours du déplacement du cylindre.

En revanche, le bloc de support 4b placé du côté opposé au sens de déplacement, ainsi que la face interne 63b de l'évidement ménagé dans la colonne 11b ont un diamètre au plus égal à celui de la face externe 33 de l'enveloppe tubulaire 31 de façon à passer à l'intérieur de l'évidement 61a de la colonne opposée sans risque de détérioration des surfaces d'appui 63a de l'évidement 61a et 41b du bloc de support 4b.

De plus, la hauteur de chaque bloc de support 4 doit être limitée vers le bas, par exemple, au niveau d'une face plane 46 parallèle au plan de défilement de la bande M, de façon à ne pas interférer avec les blocs hydrauliques 14a, 14b entre lesquels sont guidées les empoises du cylindre de travail 2.

Les évidements 61 et les blocs de support 4 peuvent être limités par des surfaces circulaires cylindriques comme indiqué sur la figure 2. Il en résulte cependant que, pour le remplacement, l'enveloppe tubulaire 31 doit, auparavant, être placée dans une position déterminée pour laquelle son axe 30 coïncide avec l'axe 30' de la face externe 41 du bloc de support 4 et de la surface 63 de l'évidement 61.

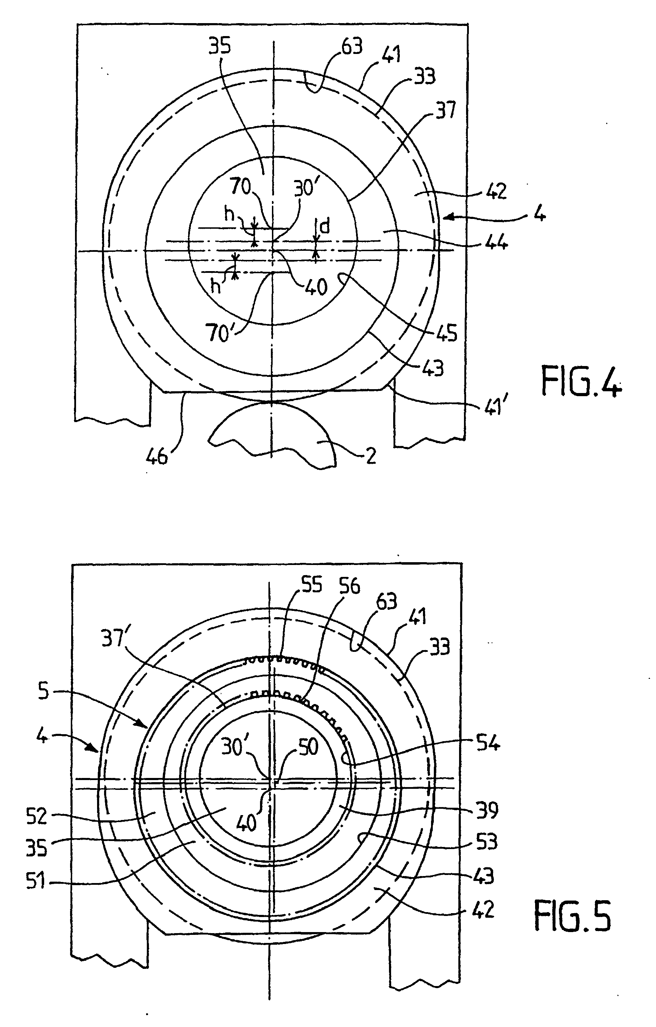

Pour éviter cet inconvénient, les évidements 61 et les blocs de support 4 peuvent avantageusement avoir une forme oblongue, limitée, vers le haut et vers le bas, par des surfaces demi-cylindriques dont les axes sont écartés d'une distance correspondant au moins au décalage de l'axe de l'enveloppe 31 entre la position de serrage, au contact du cylindre de travail, et la position de remplacement pour laquelle les cylindres sont écartés. Cette disposition, qui sera décrite en détail plus loin, en référence à la figure 4, permet de procéder à l'extraction et au remplacement du cylindre 3 sans avoir à recentrer l'enveloppe tubulaire 31 dans une position précise.

Tout ce qui vient d'être exposé s'applique également au cylindre de soutien inférieur 3' et à ses blocs de support 4'a, 4'b qui peuvent être logés dans des évidements 61'a, 61'b des deux colonnes, respectivement, 11a et 11b de la cage 1, le cylindre de soutien inférieur 3' étant extrait et remplacé de la même façon que le cylindre de soutien supérieur 3.

Pour permettre tous les réglages de niveau, il est préférable que les deux cylindres de soutien, respectivement supérieur 3 et inférieur 3' soient du type à enveloppe tournante, comme indiqué sur la figure 2. Toutefois, si les possibilités de déplacement radial de l'enveloppe 31 par rapport à l'arbre central 34 sont suffisantes pour réaliser les réglages de niveau nécessaires pour tous les cylindres, il est possible d'utiliser un seul cylindre à enveloppe tournante, le second cylindre de soutien inférieur 3' étant un cylindre plein porté par deux empoises 4'a, 4'b. De la façon habituelle, celles-ci peuvent prendre appui sur le fond des colonnes 11a, 11b par des cales d'épaisseur variable permettant de régler le niveau du cylindre 3' et de la ligne de passe.

Cependant, comme on l'a déjà indiqué, les empoises inférieures 4'a, 4'b peuvent aussi être logées, comme les blocs de support supérieurs 4a, 4b, dans des évidements 61'a, 61'b des deux colonnes 11a, 11b, selon la disposition représentée sur les figures 1 et 2.

Le cylindre de soutien inférieur peut être monté sur des cales ou des excentriques permettant les déplacements du cylindre entre une position basse de retrait et une position haute correspondant au niveau de la ligne de passe.

L'épaisseur de l'entrefer 15 est déterminée en réglant le niveau du cylindre de travail supérieur 2 qui doit être mis au contact du cylindre de soutien supérieur 3. Le niveau de ce dernier dépend donc du diamètre du cylindre de travail 2.

En ce qui concerne les cylindres de travail les systèmes connus de remplacement de ces cylindres peuvent être utilisés.

Dans une cage de laminage selon l'invention on peut donc installer à poste fixe le système de démontage des cylindres de soutien. Il est possible, en cas de besoin, de changer seulement le cylindre supérieur 3, le démontage pouvant être effectué sans avoir à extraire les cylindres de travail, ou les cylindres intermédiaires dans une cage sexto. Un autre avantage de l'invention est donc de diminuer les temps d'arrêt de l'installation pour le remplacement des cylindres usés ou endommagés.

Les réglages de niveau du cylindre de soutien supérieur 3 sont effectués, selon l'invention, par déplacement de l'enveloppe tournante 31 au moyen de l'ensemble des patins 36 et des vérins 75 agissant en sens opposés.

Sur la figure 1, on a représenté schématiquement, et à titre de simple exemple, un système 9 de commande hydraulique de la position radiale des patins d'appui 36 de l'enveloppe tubulaire 31.

La position radiale de chaque patin 36a, 36b... est contrôlée par au moins un vérin hydraulique 38a, 38b... qui est alimenté individuellement, à partir d'une centrale hydraulique 91, par un circuit 92a, 92b... sur lequel est placée une servo-valve 93a, 93b....

Chaque vérin 38a, 38b peut être commandé en position ou en pression, par la servo-valve associée 93a, 93b... en fonction des ordres donnés sur une ligne individuelle 94a, 94b... par une unité de calcul 94 à plusieurs entrées d'informations 95.

Sur une série d'entrées 95a affectées, respectivement, à chacun des patins 36a, 36b..., sont appliqués des signaux de mesure de position émis par des organes de mesure 96a, 96b...

Une valeur de consigne constituant une référence de position globale de l'enveloppe 31 est affichée sur une seconde entrée 95b de l'unité de calcul 94.

Cette valeur de consigne peut être affichée manuellement ou bien élaborée par un automate de gestion de séquences S qui, en tenant compte des divers paramètres tels que les caractéristiques de la cage et les diamètres des cylindres, permet de déterminer les niveaux de l'enveloppe 31, respectivement dans la position de démontage et dans la position de laminage.

Sur une autre entrée 95c est appliqué un signal de correction d'épaisseur émis par une jauge d'épaisseur du produit associée au laminoir.

En outre, pour assurer la correction de planéité, l'unité de calcul 94 comprend également une entrée 95d de signaux de mesure émis par un dispositif 97' de mesure de planéité, par exemple un rouleau muni de capteurs. A partir de ces informations, l'unité de calculs 94 émet vers les servovalves 93a, 93b..., des ordres individuels de correction des pressions appliquées sur chacun des patins 36, de façon à modifier la répartition des contraintes pour corriger les défauts mesurés.

Ces régulations sont activées ou non par un logiciel de contrôle symbolisé, sur chaque ligne du schéma, par des interrupteurs 98 et qui permet, par exemple, de combiner les ordres individuels de régulation de planéité avec la commande globale déterminant le niveau moyen souhaité de la génératrice d'appui.

Le processus de démontage des cylindres va maintenant être décrit. Pour simplifier on suppose, dans cet exemple d'application, que le remplacement des cylindres est effectué après arrêt du laminoir, le produit ne restant pas engagé entre les cylindres de travail.

Pour remplacer les cylindres de travail, ces derniers doivent d'abord être écartés des cylindres de soutien correspondants.

On abaisse tout d'abord le cylindre de soutien inférieur 3', par exemple au moyen de ses cales de réglage, de façon que ses empoises 4' viennent reposer sur des rails fixes 8' par l'intermédiaire de galets 81'.

Le cylindre de travail inférieur 2' est maintenu par ses vérins de cintrage à un niveau supérieur et se trouve donc écarté du cylindre de soutien 3'. La bande métallique n'étant pas engagée, le cylindre de travail supérieur 2 repose sur le cylindre de travail inférieur 2'. On soulève alors l'enveloppe tournante 31 du cylindre de soutien supérieur 3 au moyen des vérins 75 pour l'écarter du cylindre de travail supérieur 2.

Au moyen des vérins de cintrage, on soulève ensuite le niveau de l'ensemble les deux cylindres de travail 2, 2', pour les placer en position de retrait au niveau de rails non représentés sur lesquels roulent les empoises du cylindre de travail inférieur 2' pour le retrait des deux cylindres usagés.

On introduit alors dans la cage une paire de cylindres de travail neufs, par déplacement en sens inverse sur des rails.

On règle le niveau du cylindre de soutien inférieur 3', par exemple au moyen de cales, pour déterminer la ligne de passe.

On abaisse le cylindre de travail inférieur 2' au contact du cylindre de soutien inférieur 3' et, au moyen des vérins de cintrage, on règle le niveau du cylindre de travail supérieur 2 en fonction de l'entrefer 15 à réaliser. En agissant simultanément sur l'ensemble des vérins 38 de réglage des patins 36, on abaisse alors l'enveloppe tournante 31 pour la remettre au contact du cylindre de travail supérieur 2.

Pour procéder au remplacement des cylindres de travail, l'enveloppe tournante 31 doit donc être d'abord écartée du cylindre de travail 2 d'une hauteur suffisante pour libérer les deux cylindres 2, 2'.

Par conséquent, comme le montre la figure 4, si l'on souhaite effectuer le retrait du cylindre de soutien supérieur 3, en passant par l'évidement 61a, sans avoir à recentrer l'enveloppe 31, il faut que les parties supérieures de la face arrondie 41 du bloc de support 4 et de la face correspondante 63 de l'évidement 61 soient centrées sur un axe 70 décalé vers le haut, de la hauteur de décollement, par rapport au niveau de travail de l'axe 30 de l'enveloppe 31 pour lequel celle-ci est au contact du cylindre de travail 2.

Cependant, ce niveau peut changer en fonction du diamètre des cylindres de travail et c'est pourquoi les parties inférieures 41' de la face externe du bloc de support 4 et de la face interne 63 de l'évidement 61, sont aussi excentrées vers le bas. Ainsi, il est possible de procéder au retrait du cylindre de soutien 3 dans toutes les positions de l'enveloppe 31.

Les empoises 4' du cylindre de soutien inférieur 3' et les évidements correspondants 61' des colonnes 11 sont réalisés de la même façon, au moins du côté du démontage.

Bien entendu, le cylindre à enveloppe tournante 3 que l'on utilise, apporte toutes les possibilités des cylindres de ce type. Par conséquent, on peut exercer, sur les patins 36, des actions individuelles de contrôle de planéité qui se superposeront simplement à l'action générale exercée simultanément sur l'ensemble des patins pour déterminer le positionnement global de l'enveloppe 31 permettant de régler les niveaux relatifs des cylindres et l'épaisseur de l'entrefer.

Il apparaît donc que la course des patins 36 d'appui de l'enveloppe doit permettre un déplacement suffisant de celle-ci par rapport à l'arbre fixe, pour permettre les déplacements entre la position de serrage et la position écartée et compenser les variations de diamètre des cylindres de travail, tout en conservant une possibilité de réglage individuel des patins 36 pour la correction de planéité.

Toutefois, dans la mesure où les cylindres de travail sont soumis à des rectifications successives, il peut arriver que la course des patins devienne insuffisante, même lorsque le cylindre à enveloppe tournante ne change pas de diamètre. De plus, lorsque l'on doit remplacer également le cylindre de soutien 3 par un nouveau cylindre avec une enveloppe rectifiée, la différence de diamètre s'ajoute aux variations des cylindres de travail et peut dépasser les possibilités de réglage des patins de maintien 36.

C'est pourquoi, il est intéressant de disposer, en outre, d'une possibilité de réglage du niveau de l'arbre central 34 par rapport à la cage.

A cet effet, on pourrait utiliser un système de cales d'épaisseurs variables, mais l'invention prévoit encore un système de réglage particulièrement intéressant, représenté sur les figures 4 et 5.

Chaque pièce de support 4a, 4b de l'arbre central 34 comprend une partie d'appui intermédiaire 42, constituée d'un corps externe en forme de douille, ayant une face circulaire interne 43, dans laquelle est enfilé un système à excentrique, interposé entre le corps 42 et la tête d'extrémité 35 de l'arbre central 34 qui est limitée par une face latérale cylindrique 37.

Dans l'exemple de la figure 4, le système à excentrique comprend au moins une bague 44 ayant une face interne 45 enfilée sur la face latérale cylindrique 37 qui est centrée sur un axe 30' et une face externe 43 centrée sur un axe 40 et enfilée dans une face interne correspondante du corps 42 de la pièce de support 4.

Les centres 30', 40, respectivement des deux faces circulaires 45, 43 de la bague 44, sont décalés d'une distance maximale (d) (Figure 4).

De la sorte, par rotation de 180° de la bague 44, l'axe 30' de l'extrémité 35 de l'arbre central peut prendre deux positions diamétralement opposées, décalées de la distance (d), respectivement, au-dessus et en-dessous du centre 40 de la face circulaire interne 43 du corps 42 de la pièce de support 4.

On augmente ainsi de la distance 2d la plage de réglage du niveau de l'enveloppe tubulaire 31 et, par conséquent, la possibilité de variation de diamètre des cylindres.

Bien entendu le même montage avec une bague excentrique intermédiaire peut être réalisé pour le cylindre de soutien inférieur 3', même s'il n'est pas du type à enveloppe tournante.

Dans ce cas, le cylindre de soutien inférieur 3' est porté par deux tourillons 35'a, 35'b montés rotatifs dans des pièces de support creuses formant empoises, avec interposition de bagues excentriques qui permettent, par rotation de 180°, de régler l'axe du cylindre inférieur 3' sur deux niveaux écartés et, ainsi, d'augmenter les possibilités de réglage.

On peut prévoir un certain nombre de bagues excentriques, avec des valeurs différentes d'excentrement, par exemple tous les 5 millimètres, de façon à couvrir la plage d'usure des cylindres nécessaires. Ces bagues peuvent être montées lors de la préparation des cylindres à l'atelier, en tenant compte des diamètres des cylindres de remplacement qui vont être introduits dans la cage.

On pourrait aussi imaginer un réglage continu de l'axe 30 de l'arbre 3 en jouant sur la position angulaire de la bague excentrique 44. Cependant un tel réglage provoquerait aussi une variation de position, dans le sens horizontal, de l'axe 30' de l'arbre 34 par rapport à l'axe 30 de l'enveloppe 31.

Pour éviter cet inconvénient, et selon un mode de réalisation perfectionné de l'invention illustré par les figures 3 et 5, chaque extrémité 35 de l'arbre 34 est montée dans un ensemble 5 de deux bagues excentriques montées l'une dans l'autre, respectivement une bague intérieure 51 et une bague extérieure 52.

La bague extérieure 52 comporte deux faces circulaires excentrées, respectivement une face interne 53 et une face externe enfilée dans la face interne 43 du corps 42 de la pièce de support 4, centrée sur l'axe 40.

La bague intérieure 51 comporte elle-même, deux faces circulaires excentrées, respectivement une face externe enfilée dans la face interne 53 de la bague extérieure 52 et une face interne 54 enfilée sur une face circulaire conjuguée 37' ménagée, de préférence, sur une douille 39 enfilée sur la face latérale 37 de la tête d'appui 35 de l'arbre 34 et , donc, centrée sur l'axe 30' de celle-ci.

Il est ainsi possible de régler indépendamment un décalage vertical et horizontal de l'axe 30' de la tête d'appui 35 de l'arbre 34 par rapport à l'axe 40 de la face interne 43 du bloc de support, en ajustant convenablement la position angulaire relative des deux bagues 51, 52 l'une par rapport à l'autre, ainsi que la position angulaire de l'ensemble 5 par rapport au bloc de support 4.

Dans le mode de réalisation particulier illustré par les figures 5 et 6, on a considéré deux bagues 51, 52 ayant une même excentricité (e) entre leurs deux faces, respectivement externe et interne. Dans la position représentée sur la figure 5, l'axe 30' de la tête d'appui 35 de l'arbre 34 et l'axe 40 du bloc de support 4 sont alignés sur une même verticale, l'axe 50 de la face intermédiaire 53 étant dans une position médiane, décalée latéralement.

A partir de cette position, il est possible, par rotation des deux bagues en sens inverse, de faire varier la distance entre les deux axes 30' et 40, en les maintenant à la verticale l'un de l'autre.

En effet, comme le montre schématiquement la figure 6, une rotation d'un angle (A) de la bague intérieure 51 et d'un angle opposé (- A) de la bague extérieure 52 aura pour effet d'abaisser l'axe 30' de la tête d'appui 35 de l'arbre 34, en le maintenant à la verticale de l'axe 40 du bloc de support 4, le décalage vertical entre ces deux axes ayant une valeur égale à 2e cos A. Pour un angle A de 90°, les deux axes 30' et 40 sont confondus.

Mais on peut aussi régler à des valeurs différentes les positions angulaires des deux bagues 51, 52 par rapport au bloc de support 4 et à l'arbre 34. Ainsi il est possible, en cas de besoin, de régler la position de l'axe 30' de l'arbre 34 en tout point situé à l'intérieur d'un cercle C de rayon 2e et centré sur l'axe 40 du bloc de support 4.

D'une façon générale, le montage des bagues 51, 52 et leurs excentricités seront adaptés aux besoins et aux caractéristiques de la cage de laminage.

Le réglage des positions angulaires des bagues excentriques 51 et 52 peut se faire à l'atelier à cylindres, en utilisant un dispositif de blocage en rotation muni, par exemple, d'un index lié à la bague intérieure 51 immobilisé par une pièce démontable sur l'arbre 3 et, respectivement, un index sur la bague extérieure 52 immobilisé sur le bloc de support 4.

Dans un mode de réalisation plus perfectionné, représenté sur la figure 3, le réglage des deux bagues excentriques peut être motorisé.

La bague intérieure 51, qui tourne sur une douille de protection 39 enfilée sur l'extrémité 35 de l'arbre 34, est munie, au niveau de sa face interne 54, d'une couronne dentée 55 sur laquelle engrène un pignon 55' monté rotatif sur l'arbre 34.

De même, la bague extérieure 52 enfilée sur la face interne 43 du corps externe 42, est munie, sur sa face extérieure, d'une couronne dentée 56 sur laquelle engrène un pignon 56' monté rotatif sur le bloc de support 4.

Pour simplifier, les couronnes dentées 55, 56 n'ont été indiquées que par un secteur sur la figure 5.

Les pignons 55', 56' sont entraînés en rotation, indépendamment l'un de l'autre par des moyens non représentés, et associés à des moyens de repérage de position montés respectivement, sur l'arbre 34 et le bloc de support 4.

Il est ainsi possible de procéder à distance au réglage de la position des cylindres de soutien en fonction, par exemple, du diamètre de nouveaux cylindres de travail lors de leur remplacement.

Comme il a été décrit précédemment l'utilisation de deux bagues excentriques permet de choisir la position de l'axe 30' de chaque extrémité 35 de l'arbre central du cylindre de soutien 3 à l'intérieur d'un cercle C centré sur l'axe 40 du bloc d'extrémité 4. Une fois la position verticale choisie en fonction du diamètre des cylindres installés, on peut sélectionner une combinaison des positions angulaire des deux bagues d'extrémité 51, 52 pour avoir un décalage horizontal déterminé entre l'axe de chaque cylindre de soutien 3, 3' et celui du cylindre de travail correspondant 2, 2'.

Ce décalage horizontal peut, d'ailleurs, être réglé différemment sur les deux extrémités 35a, 35b de l'arbre 34.

On peut ainsi réaliser très simplement un réglage, appelé "Offset", des positions relatives des cylindres dans le plan horizontal, de façon à éviter une déformation de la génératrice de contact G, celle-ci ayant tendance à s'enrouler sur le cylindre de soutien en provoquant des variations non contrôlées du bombé d'aplatissement des cylindres, ce qui engendre des instabilités de la cage de laminage et une dégradation de la planéité du produit laminé. Ce phénomène, connu sous le nom de croisement des cylindres, peut être ainsi corrigé mais il est possible, également, de provoquer un croisement volontaire des cylindres dans le but de contrôler la planéité du produit.

On sait aussi que la valeur exacte de cet "Offset" agit sur la déformation horizontale du cylindre de travail sous l'effort de laminage, ce qui est particulièrement sensible pour les cylindres de petit diamètre.

Il est donc possible avec une cage de laminage selon l'invention et équipée de bagues excentriques du type décrit précédemment, de procéder à un préréglage de l"Offset" des cylindres, par exemple en fonction de l'effort de laminage prévu pour le produit considéré, de manière à maîtriser à une valeur souhaitable, la déformation horizontale des cylindres de travail.

On pourrait, de la même façon, avec une cage de laminage selon l'invention, régler des décalages horizontaux des cylindres de soutien de sens opposé entre les blocs de support 4a, 4b installés respectivement sur les deux colonnes 11a, 11b du laminoir. On réaliserait ainsi un dispositif de croisement des cylindres qui pourrait être utilisé pour obtenir une variation du bombé des cylindres et contrôler la planéité du produit laminé.

Bien entendu, l'invention ne se limite pas aux détails des modes de réalisation qui viennent d'être décrits à titre d'exemple, des variantes pouvant être imaginées, en fonction des besoins, sans s'écarter du cadre de protection défini par les revendications.

Par exemple, il est particulièrement intéressant de donner un profil circulaire aux pièces de support du ou des cylindres de soutien et aux évidements correspondants dont les dimensions peuvent ainsi être réduites au maximum, tout en permettant le démontage du cylindre. Cependant, un autre profil arrondi, par exemple en anse de panier, permettrait encore, selon l'invention, de répartir la pression appliquée sur toute la largeur de la traverse 16 et dans des directions divergentes réparties autour de l'axe.

D'autre part, l'invention peut comporter tous les perfectionnements et organes annexes classiques, qui n'ont donc pas été décrits. En particulier, un dispositif à clames articulées, disposé entre les colonnes 11 et les blocs de support 4, permet d'interdire, en fonctionnement, les mouvements axiaux intempestifs qui peuvent se produire sous l'effet des poussées axiales induites par les efforts de laminage.

Il est à noter que, les blocs de support étant fixes en service, ce blocage axial ne risque pas de perturber la régulation d'épaisseur.

Par ailleurs, le processus de démontage qui, pour simplifier, a été décrit plus haut dans le cas où la bande ne reste pas engagée, peut-être adapté au laminage continu dans lequel le remplacement des cylindres doit se faire avec bande engagée.

Dans ce cas, le cylindre de travail supérieur est associé à des rails fixes et placé au niveau voulu par les vérins de cintrage. Des tronçons de rails amovibles assurent, de façon connue, les liaisons au niveau de la cage.

D'autre part, l'invention a été décrite dans le cas d'un laminoir quarto mais peut s'appliquer à un autre type de laminoir utilisant au moins un cylindre de soutien d'assez grand diamètre par rapport aux cylindres de travail par exemple un laminoir de type sexto ou Z-High.

De même, l'invention peut s'appliquer aux laminoir dans lesquels les cylindres de travail ne sont pas portés par des empoises mais, par exemple, par des fourchettes d'équilibrage.

Les signes de référence insérés après les caractéristiques techniques mentionnées dans les revendications, ont pour seul but de faciliter la compréhension de ces dernières et n'en limitent aucunement la portée.

## Revendications

1. Installation de laminage d'un produit en bande métallique comprenant :
- une cage de maintien fixe (1) ayant deux colonnes écartées (11a, 11b) formant chacune un cadre fermé comprenant deux montants (12, 12'), une traverse supérieure (16) et une traverse inférieure (16'), et limitant une fenêtre centrale (6),
- au moins deux cylindres à axes parallèles définissant un entrefer (15) de passage d'un produit (M) suivant un plan de laminage (P1) avec application, entre les cylindres, d'un effort de serrage pour le laminage du produit (M),
- au moins l'un des cylindres constituant un cylindre de soutien (3) pour l'application de l'effort de serrage, ledit cylindre de soutien (3) étant monté rotatif autour de son axe et porté par deux têtes d'extrémités opposées (35a, 35b) montées chacune dans une pièce de support (4) prenant appui, du côté opposé à l'entrefer (15), sur une face d'appui (63) de la traverse correspondante (16, 16') de chaque colonne (11a, 11b),
**caractérisé par le fait que**, au moins d'un côté du plan de laminage (P1), la traverse (16) de chaque colonne (11a, 11b) est munie d'une face d'appui (63) présentant, sur toute la largeur de la fenêtre (6) un profil arrondi concave s'étendant sur un secteur angulaire d'au moins 180' et que la pièce de support (4) de chaque tête d'extrémité (35a, 35b) du cylindre de soutien correspondant (3) prend appui sur ladite traverse (16) par l'intermédiaire d'une partie d'appui (42) limitée par une face de contact (41) ayant un profil arrondi convexe conjugué à celui de la face d'appui (63).

2. Installation selon la revendication 1 comprenant, de chaque côté du plan de laminage (P1), au moins deux cylindres, respectivement un cylindre de travail (2) tournant autour d'un arbre ayant deux tourillons opposés portés par des empoises enfilées entre deux faces de guidage (13) parallèles au plan de serrage (P2) passant par les axes des cylindres de travail (2, 2'), et au moins un cylindre de soutien (3) de plus grand diamètre que le cylindre de travail (2), **caractérisée par le fait que**, au moins d'un côté du plan de laminage (P1), la fenêtre (6) de chaque colonne (11a, 11b) de la cage (1) comprend, à son extrémité opposée au plan de laminage (P1), un évidement (61) limité par une face arrondie (63) s'étendant sur un secteur angulaire d'au moins 180° et une partie centrale (60) limitée par deux côtés parallèles de support des faces de guidage (13) des empoises du cylindre de travail (2).

3. Installation de laminage selon l'une des revendications 1 et 2, **caractérisée par le fait que**, au moins d'un côté du plan de laminage (P1), la face d'appui concave (63) de la traverse (16) et la face de contact (41) de la pièce de support (4) présentent un profil circulaire sur un secteur d'au moins 180°.

4. Installation de laminage selon l'une des revendications précédentes, dans laquelle au moins un cylindre de soutien (3) peut être retiré de la cage (1) par déplacement parallèlement à son axe (30), **caractérisée par le fait qu'**une première colonne (11a) de la cage (1) est munie d'un premier évidement (61a) pour le logement d'une première pièce de support (4a) du cylindre (3), qui traverse complètement ladite première colonne (11a), et que ledit premier évidement (61a) ainsi que ladite première pièce de support (4a) présentent, dans toutes les directions, des dimensions supérieures à celles du cylindre de soutien (3), de façon à en permettre le démontage au moins dans une position de celui-ci par rapport à la cage (1), par déplacement axial dudit cylindre (3) du côté de ladite première colonne (11a), en passant par ledit premier évidement (61a) de plus grandes dimensions.

5. Installation de laminage selon la revendication 4, **caractérisée par le fait que** la seconde pièce de support (4b) du cylindre (3) opposée au côté de démontage et l'évidement correspondant (61b) de la seconde colonne (11b) de la cage (1) présentent, dans toutes les directions, des dimensions au plus égales à celles du cylindre (3), ce dernier étant ainsi démontable en bloc, avec ses deux pièces de support (4a, 4b), en passant par le premier évidement (61a).

6. Installation de laminage selon la revendication 5, **caractérisée par le fait que** la face d'appui (63a) du premier évidement (61a) d'une première colonne (11a) placée du côté du démontage et la face de contact (41a) de la pièce de support (4a) correspondante présentent, sur un secteur angulaire d'au moins 180° tournée du côté opposé à l'entrefer, un profil circulaire de diamètre un peu supérieur à celui du cylindre de soutien (3) et que la face d'appui (63b) du second évidement (61b) de la seconde colonne (11b) placée du côté opposé ainsi que la face de contact (41b) de la pièce de support (4b) correspondante présentent, au moins du côté opposé à l'entrefer (15), un profil circulaire de diamètre au plus égal à celui du cylindre (3).

7. Installation de laminage selon la revendication 6, **caractérisée par le fait que**, le niveau des têtes d'extrémités (35a, 35b) du cylindre (3) étant réglable entre deux positions écartées verticalement, chaque pièce de support (4a, 4b) du cylindre (3) est limitée par une face de contact (41) de forme oblongue en section droite, comprenant deux faces semi-circulaires opposées dont les centres sont écartés d'une distance permettant les réglages de position et que les évidements correspondants (61a, 61b) des deux colonnes (11a, 11b) sont limités chacun par une face d'appui (63a, 63b) ayant, en creux, une forme oblongue conjuguée à celle de la pièce de support (4a, 4b) correspondante.

8. Installation de laminage selon l'une des revendications 4 à 6, **caractérisée par le fait que** les deux pièces de support (4a, 4b) des têtes d'extrémité (35a, 35b) du cylindre de soutien (3) sont munies de galets (81) roulant sur des rails (8) fixés sur la cage (1) et s'étendant entre les deux montants (11a, 11b), pour le démontage du cylindre (3) par roulement sur lesdits rails (8).

9. Installations selon l'une des revendications précédentes, **caractérisée par le fait qu'**au moins un cylindre de soutien (3) est du type à enveloppe tournante comprenant un arbre central (34) constituant une poutre de support allongée ayant deux têtes d'extrémités opposées (35a, 35b) montées chacune dans une pièce de support (4a, 4b), une enveloppe tubulaire (31) montée rotative autour de l'arbre central (34) et ayant une face interne (32) et une face externe (33) cylindriques, centrées sur un axe de rotation (30), une pluralité de patins d'appui (36) disposés l'un à côté de l'autre le long de l'arbre central (34) entre celui-ci et la face interne (32) de l'enveloppe, et des moyens (38) de réglage individuel de la position radiale de chaque patin d'appui (36) par rapport à l'arbre central (34), et que les pièces de support (4a, 4b) des deux têtes d'extrémités (35a, 35b) de l'arbre central (34) sont logées chacune dans un évidement (61) ménagé à une extrémité correspondante de la fenêtre (6) de la colonne (11a, 11b) correspondante et limité par une face d'appui concave (63), ladite pièce de support (4a, 4b) étant entourée, au moins du côté opposé à l'entrefer (15), par une partie d'appui (42) limitée par une face de contact convexe (41) conjuguée à ladite face d'appui (63) de l'évidement (61).

10. Installation selon la revendication 9, **caractérisée par le fait que** l'ensemble des moyens (38) de réglage individuel de la position radiale des patins (36) constitue un moyen d'application de l'effort de serrage entre les cylindres, lesdits patins (36) étant commandés simultanément, de façon à régler et maintenir l'enveloppe (31) au niveau souhaité par rapport au plan de laminage (P1).

11. Installation de laminage selon la revendication 10, comprenant deux cylindres de travail (2, 2') et au moins un cylindre de soutien (3) du type à enveloppe tournante, **caractérisée par le fait qu'**elle comprend des moyens de réglage d'un écartement des cylindres de travail (2, 2') correspondant à l'entrefer souhaité et des moyens de commande simultanée des moyens de réglage (38a, 38b...) associés respectivement aux patins (36a, 36b...) pour la mise en contact de l'enveloppe tournante (31) avec le cylindre de travail (2) associé et l'application de l'effort de serrage.

12. Installation de laminage selon l'une des revendications 10 et 11, dans laquelle la position radiale de chaque patin (36a, 36b...) par rapport à l'arbre (34) est réglée par au moins un vérin hydraulique (38a, 38b...) associé à un système d'alimentation (9) comprenant une centrale hydraulique (91), des circuits individuels (92a, 92b,...) d'alimentation de chacun des patins (36a, 36b,...) munis chacun d'une servo-valve (93a, 93b,...) et un ensemble (90) de régulation des pressions appliquées sur chacun des patins (36a, 36b,...) en fonction de la position radiale détectée par un organe individuel de mesure de position (96a, 96b,...) associé à chacun des patins (36a, 36b,...), **caractérisée par le fait que** l'ensemble de régulation (90) comprend une unité de calcul (94) ayant au moins une série (95a) d'entrée de signaux de mesure de position émis par les organes individuels de mesure (96a, 96b,...), une entrée (95b) d'un signal de consigne correspondant à une référence de position globale de l'enveloppe tournante (31), une entrée (95c) d'un signal de correction d'épaisseur et une série d'entrées (95d) de signaux individuels de régulation de planéité, déterminant une correction de la pression appliquée sur chacun des patins (36a, 36b,...).

13. Installation selon l'une des revendications 9 à 12, **caractérisé par le fait qu'**elle comprend deux moyens de réglage du niveau relatif du cylindre de soutien (3) à enveloppe tournante par rapport au cylindre de travail (2), respectivement un moyen de réglage de la position globale de l'enveloppe tournante (31) par rapport à l'arbre central (34) et un moyen (44, 5) de réglage de la position des deux têtes d'extrémités (35a, 35b) du cylindre (3), respectivement, par rapport aux parties d'appui fixes (63a, 63b) des deux colonnes (11a, 11b) de la cage (1).

14. Installation de laminage selon l'une des revendications précédentes, **caractérisée par le fait que** chaque pièce de support (4) d'une tête extrémité (35a, 35b) du cylindre (3) est munie de moyens (44, 5) d'ajustement du niveau de ladite tête d'extrémité (35a, 35b) par rapport à la face d'appui (63) de la traverse (16).

15. Installation de laminage selon la revendication 14, **caractérisée par le fait que** les moyens d'ajustement comprennent au moins une bague excentrique (44) interposée entre une partie d'appui annulaire (42) de la pièce de support (4) et la tête d'extrémité (35) du cylindre (3), ladite bague (44) ayant deux faces circulaires excentrées l'une par rapport à l'autre, respectivement une face interne (45) enfilée sur une face d'appui cylindrique (37, 37') ménagée sur la tête d'extrémité (35) du cylindre (3) et une face externe enfilée dans un alésage cylindrique (43) limitant vers l'intérieur ladite partie d'appui annulaire (42), la position angulaire de ladite bague (44) par rapport à la pièce de support (4) pouvant être modifiée par rotation de la bague (44) pour régler le niveau de l'axe (30') de la face d'appui cylindrique (37, 37') de la tête d'extrémité (35) du cylindre (3) par rapport à la pièce de support (4).

16. Installation de laminage selon la revendication 14, **caractérisée par le fait que** les moyens d'ajustement comprennent un ensemble de réglage (5) interposé entre une partie d'appui annulaire (42) de la pièce de support (4) et la tête d'extrémité (35) du cylindre (3), ledit ensemble (5) comprenant deux bagues excentriques montées l'une dans l'autre et ayant chacune deux faces circulaires excentrées l'une par rapport à l'autre, respectivement une bague interne (51) enfilée sur la tête d'extrémité (35) et une bague externe (52) enfilée dans un alésage (43) limitant vers l'intérieur la partie d'appui annulaire (42) de la pièce de support (4), les positions angulaires relatives desdites bagues l'une par rapport à l'autre et par rapport à la pièce de support (4) pouvant être modifiées.

17. Installation de laminage selon la revendication 16, **caractérisée par le fait que** le réglage des positions angulaires respectives des deux bagues (51, 52) par rapport à la pièce de support (4) détermine, en combinant les excentrements, le déplacement de l'axe (30') de la face d'appui cylindrique (37) de la tête d'extrémité (35) à l'intérieur d'une cercle centré sur l'axe (40) de l'alésage (43) et ayant un rayon égal à la somme des excentrements maximaux des deux bagues.

## Claims

1. A metal band product rolling installation comprising :
- a fixed holding stand (1) having two separate standards (11a, 11b) each forming a closed frame comprising two uprights (12, 12'), an upper crossbeam (16) and a lower crossbeam (16'), and delineating a centre window (6),
- at least two rolls with parallel axes delineating a passage gap (15) for a product (M) following a rolling plane (P1) with the application, between the rolls, of a clamping load for rolling the product (M),
- at least one of the rolls being a back-up roll (3) for imparting the clamping load, the said back-up roll (3) being mounted to rotate around its axis and carrier by two opposite end heads (35a, 35b), each mounted in a supporting part (4) resting on the side opposite to the gap (15), on a back-up face (63) of the corresponding crossbeam (16, 16') of each standard (11a, 11b),
**characterized in that**, at least on one side of the rolling plane (P1), the crossbeam (16) of each standard (11a, 11b) is provided with a back-up face (63) exhibiting, over the whole width of the window (6), a concave rounded profile extending on an angular sector of at least 180° and **in that** the supporting part (4) of each end head (35a, 35b) of the corresponding back-up roll (3) rests on the said crossbeam (16) via a back-up part (42) delineated by a contact face (41) with a convex rounded profile matching that of the back-up face (63).

2. An installation according to claim 1, comprising, on either side of the rolling plane (P1) at least two rolls, respectively a working roll (2) revolving around a shaft provided with two opposite journals, carried by chocks inserted between two guiding faces (13) parallel to the clamping plane (P2) going through the axes of the working rolls (2, 2'), and at least one back-up roll (3) of larger diameter than that of the working roll (2), **characterized in that** at least on one side of the rolling plane (P1), the window (6) of each standard (11a, 11b) of the stand (1) comprises, on its end opposite to the rolling plane (P1), a cavity (61) delineated by a rounded face (63) extending on an angular sector of at least 180° and a central part (60) delineated by two parallel sides supporting guiding faces (13) of the chocks of the working roll (2).

3. A rolling installation according to one of claims 1 and 2, **characterized in that**, at least on one side of the rolling plane (P1), the concave back-up face (63) of the crossbeam (16) and the contact face (41) of the supporting part (4) show a circular profile over a sector of at least 180°.

4. A rolling installation according to one of the previous claims, in which at least one back-up roll (3) can be removed from the stand (1) by moving parallel to its axis (30), **characterized in that** a first standard (11a) of the stand (1) is provided with a first cavity (61a) to accommodate a first supporting part (4a) of the roll (3), which goes through the said first standard (11a) completely, and **in that** the said first cavity (61a) as well as the said first supporting part (4a) exhibit, in all directions, greater sizes than those of the back-up roll (3), in order to enable removal of the latter at least in one position of the latter with respect to the stand (1) by axial displacement of the said roll (3) on the side of the said first standard (11a), by going through the said first cavity (61a) whose sizes are greater.

5. A rolling installation according to claim 4, **characterized in that** the second supporting part (4b) of the roll (3) opposite to the removal side and the corresponding second cavity (61b) of the second standard (11b) of the stand (1) exhibit, in all directions, sizes at most equal to those of the roll (3), whereas the latter is thus extractable as a whole, with both its supporting parts (4a, 4b), through the first cavity (61a).

6. A rolling installation according to claim 5, **characterized in that** the back-up face (63a) of the first cavity (61a) of a first standard (11a) placed on the removal side and the contact face (41a) of the corresponding supporting part (4a) exhibit, over an angular sector of at least 180° directed to the side opposite to the gap, a circular profile whose diameter is slightly greater than that of the back-up roll (3) and **in that** the back-up face (63b) of the second cavity (61b) of the second standard (11b) placed on the opposite side as well as the contact face (41b) of the corresponding supporting part (4b) exhibit, at least on the side opposite to the gap (15), a circular profile whose diameter should not exceed that of the roll (3).

7. A rolling installation according to claim 6, **characterized in that** the level of each end head (35a, 35b) of the roll (3) is adjustable between two positions separated by a vertical distance, whereas each supporting part (4a, 4b) of the roll (3) is delineated by a contact face (41) of oblong shape on its straight section, comprising two opposite semi-circular faces whose centres are separated by a distance enabling the position adjustments, and **in that** the corresponding cavities (61a, 61b) of both standards (11a, 11b) are each delineated by a back-up face (63a, 63b) showing, in hollow, an oblong shape matching that of the corresponding supporting part (4a, 4b).

8. A rolling installation according to one of claims 4 to 6, **characterized in that** both supporting parts (4a, 4b) of the end heads (35a, 35b) of the back-up roll (3) are provided with rollers (81) running on rails (8) fixed on the stand (1) and extending between both uprights (11a, 11b), for removing the roll (3) by making it run over the said rails (8).

9. An installation according to one of the previous claims, **characterized in that** at least one back-up roll (3) is of the rotary casing type comprising a centre shaft (34) constituting an oblong supporting beam with two opposite end heads (35a, 35b) each mounted in a supporting part (4a, 4b), a tubular casing (31) mounted to rotate around the centre shaft (34) and exhibiting a cylindrical internal face (32) and a cylindrical external face (33) centred on a rotation axis (30), a number of back-up pads (36) arranged beside one another along the centre shaft (34) between the latter and the internal face (32) of the casing, and means (38) for individual adjustment of the radial position of each back-up pad (36) with respect to the centre shaft (34), and **in that** the supporting parts (4a, 4b) of both end heads (35a, 35b) of the centre shaft (34) are each accommodated in a cavity (61) provided in a corresponding end of the window (6) of the corresponding standard (11a, 11b) and delineated by a concave back-up face (63), whereas the said supporting part (4a, 4b) is surrounded, at least on the side opposite to the gap (15), by a back-up part (42) delineated by a convex contact face (41) matching that of the back-up face (63) of the cavity (61).

10. An installation according to claim 9, **characterized in that** the set of means (38) for individual adjustment of the radial position of the pads (36) constitutes a means for applying the clamping load between the rolls, whereas the said pads (36) are controlled simultaneously, in order to adjust and to maintain the casing (31) at the level requested with respect to the rolling plane (P1).

11. A rolling installation according to claim 10, comprising two working rolls (2, 2') and at least one back-up roll (3) of the rotary casing type, **characterized in that** it comprises means to adjust the distance between the working rolls (2, 2') in relation to the requested gap and means for simultaneous control of the adjustment means (38a, 38b...) respectively associated with the pads (36a, 36b...) for bringing the rotary casing (31) in contact with the related working roll (2) and for applying the clamping load.

12. A rolling installation according to one of claims 10 and 11, in which the radial position of each. pad (36a, 36b...) with respect to the shaft (34) is adjusted by at least one hydraulic jack (38a, 38b...) connected to a power supply system (9) comprising a hydraulic station (91), individual circuits (92a, 92b...) for supplying each pad (36a, 36b...) each provided with a servo valve (93a, 93b...) and a regulation assembly (90) for the pressures applied to each pad (36a, 36b...) in relation to the radial position detected by an individual position measurement instrument (96a, 96b...) connected to each pad (36a, 36b...), **characterized in that** the regulation assembly (90) comprises a computation unit (94) with at least one series (95a) of position measurement signal inputs transmitted by the individual measuring instruments (96a, 96b...), an input (95b) of a set signal corresponding to a whole reference position of the rotary casing (31), an input (95c) for a thickness correction signal and a series of inputs (95d) for individual flatness regulation signals, determining a correction of the pressure applied to each pad (36a, 36b...).

13. An installation according to one of claims 9 to 12, **characterized in that** it comprises two means for adjustment of the relative level of the back-up roll (3) with rotary casing with respect to the working roll (2), respectively a means for adjustment of the whole position, of the rotary casing (31) with respect to the centre shaft (34) and a means (44, 5) for position adjustment of both end heads (35a, 35b) of the roll (3), respectively, with respect to the fixed back-up faces (63a, 63b) of both standards (11a, 11b) of the stand (1).

14. A rolling installation according to one of the previous claims, **characterized in that** each supporting part (4) of an end head (35a, 35b) of the roll (3) is provided with means (44, 5) for adjustment of the level of the said end head (35a, 35b) with respect to the back-up face (63) of the crossbeam (16).

15. A rolling installation according to claim 14, **characterized in that** the adjustment means comprise at least one eccentric ring (44) interposed between an annular back-up part (42) of the supporting part (4) and the end head (35) of the roll (3), whereas the said ring (44) exhibits two circular faces moved out of centre with respect to one another, respectively an internal face (45) mounted on a cylindrical back-up face (37, 37') provided on the end head (35) of the roll (3) and an external face mounted inside a cylindrical bore (43) delineating inwards the said angular back-up part (42), whereas the angular position of the said ring (44) with respect to the supporting part (4) can be modified by rotation of the ring (44) in order to adjust the level of the axis (30') of the cylindrical back-up face (37, 37') of the end head (35) of the roll (3) with respect to the supporting part (4).

16. A rolling installation according to claim 14, **characterized in that** the adjustment means comprise an adjustment assembly (5) interposed between an annular back-up part (42) of the supporting part (4) and the end head (35) of the roll (3), whereas the said assembly (5) comprises two eccentric rings mounted inside one another, and exhibiting, each, two circular faces moved out of centre in relation to one another, respectively an internal ring (51) mounted on the end head (35) and an external ring (52) mounted inside a bore (43) delineating inwards the annular back-up section (42) of the supporting part (4), whereas the relative angular positions of the said rings in relation to one another and with respect to the supporting part (4) can be modified.

17. A rolling installation according to claim 16, **characterized in that** the adjustment of the respective angular positions of both rings (51, 52) with respect to the supporting part (4) determines, while combining the eccentricities, the displacement of the axis (30') of the cylindrical back-up face (37) of the end head (35) inside a circle centred on the axis (40) of the bore (43) and of a radius equal to the sum of the maximum eccentricities of both rings.

## Patentansprüche

1. Walzanlage für ein Produkt aus Metallband mit
- einem stafionären Gestell (1) mit zwei voneinander beabstandeten Ständern (11a, 11b), die jeweils einen geschlossenen Rahmen bilden, der zwei Stützen (12, 12'), einen oberen Querbalken (16) und einen unteren Querbalken (16') aufweist, und die ein zentrales Fenster (6) umgrenzen,
- mindestens zwei Walzen mit parallelen Achsen, die einen Spalt (15) für den Durchgang eines Produkts (M) entlang einer Walzebene (P1) bilden, wobei zwischen den Walzen eine Spannkraft zum Walzen des Produkts (M) angewandt wird,
- wobei mindestens eine der Walzen eine Stützwalze (3) zum Anlegen der Spannkraft bildet, wobei die Stützwalze (3) um ihre Achse drehend und an zwei entgegengesetzt gerichteten Enden (35a, 35b) gehalten ist, die jeweils in einem Tragteil (4) befesfigt sind, das auf der dem Spalt (15) gegenüberliegenden Seite auf einer Auflagefläche (63) des entsprechenden Querbalkens (16, 16') jedes Ständers (11a, 11b) aufliegt,
**dadurch gekennzeichnet, dass** der Querbalken (16) jedes Ständers (11a, 11b) auf mindestens einer Seite der Walzebene (P1) mit einer Auflagefläche (63) versehen ist, die über die ganze Breite des Fensters (6) ein abgerundetes, konkaves Profil aufweist, das sich über einen Winkelsektor von mindestens 180° erstreckt, und dass das Tragteil (4) jedes Endes (35a, 35b) der entsprechenden Stützwalze (3) auf dem Querbalken (16) über ein Auflageteil (42) aufliegt, das von einer Kontaktfläche (41) umgrenzt wird, die ein abgerundetes, zu dem der Auflagefläche (63) komplementäres konvexes Profil aufweist.

2. Walzanlage nach Anspruch 1, die auf jeder Seite der Walzebene (P1) mindestens zwei Walzen aufweist, nämlich eine Arbeitswalze (2), die sich um eine Welle mit zwei entgegengesetzt gerichteten Zapfen dreht, die von Einbaustücken getragen werden, die zwischen zwei zur Spannebene (P2) parallel liegenden und über die Achsen der Arbeitswalzen (2, 2') führenden Führungsflächen (13) eingezogen sind, und mindestens eine Stützwalze (3) mit einem Durchmesser, der größer ist als derjenige der Arbeitswalze (2), **dadurch gekennzeichnet, dass** das Fenster jedes Ständers (11a, 11b) des Gestells (1) zumindest auf einer Seite der Walzebene (P1) an seinem von der Walzebene (P1) abgewandten Ende eine Aussparung (61), die von einer abgerundeten, sich über einen Winkelsektor von mindestens 180° erstreckenden Fläche (63) umgrenzt wird, und einen zentralen Teil (60), der von zwei parallelen Stützseiten der Führungsflächen (13) der Einbaustücke der Arbeitswalzen (2) begrenzt wird, aufweist.

3. Walzanlage nach einem der Ansprüche 1 und 2, **dadurch gekennzeichnet, dass** zumindest auf einer Seite der Walzebene (P1) die konkave Auflagefläche (63) des Querbalkens (16) und die Kontaktfläche (41) des Tragteils (4) über einen Sektor von mindestens 180° ein kreisförmiges Profil aufweisen.

4. Walzanlage nach einem der vorstehenden Ansprüche, bei der mindestens eine Stützwalze (3) durch zu deren Achse (30) paralleles Verschieben aus dem Gestell (1) gezogen werden kann, **dadurch gekennzeichnet, dass** ein erster Ständer (11a) des Gestells (1) mit einer den ersten Ständer (11a) komplett durchquerenden ersten Aussparung (61a) zum Aufnehmen eines ersten Tragteils (4a) der Walze (3) versehen ist, und dass die erste Aussparung (61a) sowie das erste Tragteil (4a) in allen Richtungen Abmessungen aufweisen, die größer sind als die der Stützwalze (3), so dass diese mindestens in einer Position in Bezug auf das Gestell (1) durch axiales Verschieben der Walze (3) zum ersten Ständer (11a) hin demontiert werden kann, wobei sie die erste Aussparung (61a) mit größeren Abmessungen durchquert.

5. Walzanlage nach Anspruch 4, **dadurch gekennzeichnet, dass** das zweite, von der Demontageseite abgewandte Tragteil (4b) der Walze (3) und die entsprechende Aussparung (61b) des zweiten Ständers (11b) des Gestells (1) in allen Richtungen Abmessungen aufweisen, die höchstens gleich denen der Walze (3), sind, wobei letztere so als ganzer Block mit ihren beiden Tragteilen (4a, 4b) über die erste Aussparung (61a) ausbaubar ist.

6. Walzanlage nach Anspruch 5, **dadurch gekennzeichnet, dass** die Auflagefläche (63a) der ersten Aussparung (61a) des ersten auf der Demontageseite liegenden Ständers (11a) und die Kontaktfläche (41a) des entsprechenden Tragteils (4a) über einen zu der vom Spalt abgewandten Seite gerichteten Winkelsektor von mindestens 180° ein kreisförmiges Profil mit einem Durchmesser aufweisen, der etwas größer ist als der der Stützwalze (3), und dass die Auflagefläche (63b) der zweiten Aussparung (61b) des auf der gegenüber liegenden Seite angeordneten zweiten Ständers (11b) sowie die Kontaktfläche (41b) des entsprechenden Tragteils (4b) zumindest auf der vom Spalt (15) abgewandten Seite ein kreisförmiges Profil mit einem Durchmesser aufweisen. der höchstens gleich groß ist wie der der Walze (3).

7. Walzanlage nach Anspruch 6, **dadurch gekennzeichnet, dass** bei einem zwischen zwei senkrecht von einander beabstandeten Positionen verstellbaren Niveau der Enden (35a, 35b) der Walze (3) jedes Tragteil (4a, 4b) der Walze (3) durch eine im Querschnitt längliche Kontaktfläche (41) begrenzt ist, die zwei einander gegenüberliegende halbkreisförmige Flächen umfasst, deren Zentren voneinander durch eine Entfernung beabstandet sind, die die Positionseinstellungen erlaubt, und dass jede der entsprechenden Aussparungen (61a, 61b) der beiden Ständer (11a, 11b) von einer Auflagefläche (63a, 63b) begrenzt ist, die eine hohle längliche, zu der des entsprechenden Tragteils (4a, 4b) komplementäre Form aufweist.

8. Walzanlage nach einem der Ansprüche 4 bis 6, **dadurch gekennzeichnet, dass** die beiden Tragteile (4a, 4b) der Enden (35a, 35b) der Stützwalze (3) mit Rollen (81) versehen sind, die auf Schienen (8) laufen, die auf dem Gestell (1) befestigt sind und sich zwischen den beiden Ständem (11a, 11b) erstrecken und zur Demontage der Walze (3) durch Rollen auf diesen Schienen (8) dienen.

9. Anlage nach einem der vorstehenden Ansprüche, **dadurch gekennzeichnet, dass** zumindest eine Stützwalze (3) vom Typ mit drehendem Mantel ist, und zwar mit einer zentralen Welle (34), die einen länglichen Tragbalken mit zwei entgegengesetzt gerichteten, jeweils in einem Tragteil (4a, 4b) angebrachten Enden (35a, 35b) bildet, einem röhrenförmigen, sich um die zentrale Welle (34) drehend angebrachten Mantel (31) mit einer zylindrischen Innenfläche (32) und einer zylindrischen Außenfläche (33), die auf eine Drehachse (30) zentriert sind, mehreren nebeneinander entlang der zentralen Welle (34) zwischen dieser und der Innenfläche (32) des Mantels angeordneten Auflagekufen (36) und Mitteln (38) zum Einstellen jeder einzelnen radialen Position jeder Auflagekufe (36) in Bezug auf die zentrale Welle (34), und dass die Tragteile (4a, 4b) der beiden Enden (35a, 35b) der zentralen Welle (34) jeweils in einer am entsprechenden Ende des Fensters (6) des entsprechenden Ständers (11a, 11b) angebrachten Aussparung (61) untergebracht sind und von einer konkaven Auflagefläche (63) umgrenzt sind, wobei das Tragteil (4a, 4b) zumindest auf der vom Spalt (15) abgewandten Seite von einem Auflageteil (42) umgeben ist, das von einer konvexen, zur Auflagefläche (63) der Aussparung (61) komplementären Kontaktfläche (41) umgrenzt ist.

10. Anlage nach Anspruch 9, **dadurch gekennzeichnet, dass** die Gesamtheit aller Mittel (38) zum Einstellen jeder einzelnen Position der Kufen (36) ein Mittel zum Anlegen der Spannkraft zwischen den Walzen bildet, wobei die Kufen (36) gleichzeitig so gesteuert werden, dass der Mantel (31) auf der gewünschten Ebene in Bezug auf die Walzebene (P1) eingestellt und gehalten wird.

11. Walzanlage nach Anspruch 10 mit zwei Arbeitswalzen (2, 2') und zumindest einer Stützwalze (3) vom Typ mit drehendem Mantel, **dadurch gekennzeichnet, dass** sie Mittel zum Einstellen eines dem gewünschten Spalt entsprechenden Abstands der Arbeitswalzen (2, 2") und Mittel zum gleichzeitigen Steuern der Einstellmittel (38a, 38b...), die jeweils mit den Kufen (36a, 36b...) zum Herstellen des Kontakts zwischen dem drehenden Mantel (31) und der dazu gehörenden Arbeitswalze (2) und zum Anlegen der Spannkraft kombiniert sind, aufweist.

12. Walzanlage nach einem der Ansprüche 10 und 11, bei der die radiale Position jeder Kufe (36a, 36b,...) in Bezug auf die Welle (34) durch mindestens einen hydraulischen Zylinder (38a, 38b,...) eingestellt wird, der zu einem Versorgungssystem (9) gehört, das eine Hydraulikzentrale (91), getrennte, jeweils mit einem Servoventil (93a, 93b,...) versehene Kreisläufe (92a, 92b....) zur Versorgung jeder einzelnen Kufe (36a, 36b,...) und eine Einheit (90) zum Regeln der Drücke, die an jede der Kufen (36a, 36b,...) in Abhängigkeit von der von einem jeder Kufe (36a, 36b,...) zugeordneten jeweiligen Positionsmessorgan (96a, 96b,...) erfassten radialen Position angelegt werden, aufweist, **dadurch gekennzeichnet, dass** die Regeleinheit (90) eine Recheneinheit (94) umfasst, die mindestens eine Serie (95a) Eingänge für von den einzelnen Positionsmessorganen (96a, 96b,...) gesendete Positionsmesssignale, einen Eingang (95b) eines einer globalen Positionsreferenz des drehenden Mantels (31) entsprechenden Sollwertsignals, einen Eingang (95c) eines Signals zur Stärkenkorrektur und eine Reihe Eingänge (95d) einzelner Ebenheitsregelungssignale, die eine Korrektur des an jede der Kufen (36a, 36b,...) angelegten Drucks bestimmen, aufweist.

13. Anlage nach einem der Ansprüche 9 bis 12, **dadurch gekennzeichnet, dass** sie zwei Mittel zum Einstellen des relativen Niveaus der Stützwalze (3) mit drehendem Mantel in Bezug auf die Arbeitswalze (2) umfasst, nämlich jeweils ein Einstellmittel für die globale Position des drehenden Mantels (31) in Bezug auf die zentrale Welle (34) und ein Mittel (44, 5) zum Einstellen der Position der beiden Enden (35a, 35b) der Walze (3) in Bezug auf die jeweiligen stationären Auflageteile (63a, 63b) der beiden Ständer (11a, 11b) des Gestells (1).

14. Walzanlage nach einem der vorstehenden Ansprüche, **dadurch gekennzeichnet, dass** jedes Auflageteil (4) eines Endes (35a, 35b) der Walze (3) mit Mitteln (44, 5) zum Justieren des Niveaus des Endes (35a, 35b) in Bezug auf die Auflagefläche (63) des Querbalkens (16) versehen ist.

15. Walzanlage nach Anspruch 14, **dadurch gekennzeichnet, dass** die Justiermittel mindestens einen zwischen einem ringförmigen Auflageteil (42) des Tragteils (4) und dem Ende (35) der Walze (3) eingefügten Exzenterring (44) umfassen, wobei der Ring (44) zwei kreisförmige zueinander exzentrische Flächen umfasst, nämlich jeweils eine Innenfläche (45), die auf eine zylindrische am Ende (35) der Walze (3) angeordnete Auflagefläche (37, 37') aufgezogen ist, und eine Außenfläche, die in eine den ringförmigen Auflageteil (42) nach innen abgrenzende zylindrische Bohrung (43) eingezogen ist, wobei die Winkelposition des Rings (44) in Bezug auf das Tragteil (4) durch Drehen des Rings (44) geändert werden kann, um das Niveau der Achse (30') der zylindrischen Auflagefläche (37, 37') des Endes (35) des Zylinders (3) in Bezug auf das Tragteil (4) zu justieren.

16. Walzanlage nach Anspruch 14, **dadurch gekennzeichnet, dass** die Justiermittel eine Einstelleinheit (5) umfassen, die zwischen einem ringförmigen Auflageteil (42) des Tragteils (4) und dem Endkopf (35) der Walze (3) eingefügt ist, wobei die Einheit (5) zwei exzentrisch ineinander montierte und jeweils zwei kreisförmige, zueinander exzentrische Flächen aufweisende Ringe umfasst, und zwar einen auf das Ende (35) aufgezogenen Innenring (51) und einen Außenring (52), der in eine das Auflageteil (42) des Tragteils (4) nach innen begrenzende Bohrung (43) eingezogen ist, wobei die relativen Winkelpositionen der Ringe zu einander und in Bezug auf das Tragteil (4) geändert werden können.

17. Walzanlage nach Anspruch 16, **dadurch gekennzeichnet, dass** die Einstellung der jeweiligen Winkelpositionen der beiden Ringe (51, 52) in Bezug auf das Tragteil (4) die Verschiebung der Achse (30') der zylindrischen Auflagefläche (37) des Endes (35) durch Kombinieren der exzentrischen Lagen innerhalb eines Kreises bestimmt, der auf die Achse (40) der Bohrung (43) zentriert ist und einen Radius hat, der der Summe der maximalen exzentrischen Lagen der beiden Ringe entspricht.
